# EUROPÄISCHE PATENTSCHRIFT

(11) **EP 1 872 027 B1**
(45) Veröffentlichungstag und Bekanntmachung des Hinweises auf die Patenterteilung: **01.04.2009**
(21) Anmeldenummer: 06742241.0
(22) Anmeldetag: 13.04.2006
(51) Int. Cl.: F16D 65/56, F16D 55/225

(54) **RADBREMSE**
WHEEL BRAKE
FREIN SUR ROUE

(30) Priorität: 20.04.2005 DE 102005018157; 20.02.2006 DE 102006007684
(43) Veröffentlichungstag der Anmeldung: 02.01.2008
(73) Patentinhaber: BPW Bergische Achsen KG, 51674 Wiehl (DE)
(72) Erfinder: DOWE, Günter, 51588 Nümbrecht (DE); PEHLE, Michael, 51371 Leverkusen (DE); ABT, Christian, 51643 Gummersbach (DE)
(74) Vertreter: Christophersen, Ulrich Rudolf
(86) Internationale Anmeldenummer: PCT/DE2006/000659
(87) Internationale Veröffentlichungsnummer: WO 2006/111136

(56) Entgegenhaltungen:
- EP-A- 0 210 749
- GB-A- 1 339 984
- US-A- 5 172 792
- US-B1- 6 311 809

## Beschreibung

Die Erfindung betrifft zunächst eine Radbremse mit integrierter Nachstelleinrichtung, mit einem in einem Bremsgehäuse geführten und gegen einen Bremsbelag arbeitenden Druckstempel, einer Zuspanneinrichtung zum Betätigen des Druckstempels, und einem im Kraftfluß zwischen Zuspanneinrichtung und Druckstempel innerhalb des Bremsgehäuses angeordneten Nachstellelement, das in Schraubverbindung mit dem Druckstempel steht.

In einer Vielzahl von Publikationen sind bereits Scheibenbremsen beschrieben, die zusätzlich zu der Brems-Zuspanneinrichtung mit einer Nachstelleinrichtung zum Ausgleich von Bremsbelag- und/oder Bremsscheibenverschleiß durch Verstellen des Abstandes zwischen Bremsbelag und Bremsscheibe versehen sind.

So zeigen z.B. die WO 2004/01 3510 A2 sowie die DE 102 09 567 A1 elektrisch betriebene Nachstelleinrichtungen innerhalb des Bremsgehäuses der Scheibenbremse. Diese wirken zum Ausgleich des Bremsbelag- oder des Bremsscheibenverschleißes über ein oder zwei axial zur Bremsscheibe verschiebbare Druckstücke auf den Bremsbelag, um so den verschleißbedingt zunehmenden Abstand zwischen dem jeweiligen Bremsbelag und der Bremsscheibe nachzustellen. Werden solche Nachstelleinrichtungen auf beiden Seiten der Bremsscheibe angeordnet, so kann der dann noch erforderliche Verschiebeweg so gering gehalten werden, daß das Lüftspiel gerade überwunden und die elastische Verformung der Bremspads und des Bremssattels, also der sogenannte Arbeitshub, ausgeglichen werden. Elektrische Nachstellsysteme sind auf das Funktionieren der elektrischen Energieversorgung des Fahrzeuges sowie der die Bremssteuerung übernehmenden Signalsysteme angewiesen. Ein Ausfall der fahrzeugeigenen elektrischen Energie- und Signalsysteme hat daher auch einen Ausfall der Nachstelleinrichtung zur Folge.

Ein Einfluß der fahrzeugeigenen Energie- und Signalsysteme ist auch dann nicht ganz zu vermeiden, wenn, wie dies z.B. mit der DE 103 42 281 A1 vorgeschlagen wird, die Nachstelleinrichtung der Scheibenbremse pneumatisch unter Ankoppelung an die Druckluftversorgung des Fahrzeuges betrieben wird.

Eine Scheibenbremse mit einer mechanisch arbeitenden Nachstellvorrichtung ist aus der DE 29 25 342 A1 bekannt. Zum Betätigen der Bremse wird ein Druckstempel mitsamt einer eine äußere Schrägverzahnung aufweisenden Mutter und einem Druckstück über eine Zuspanneinrichtung mit Druck beaufschlagt, wodurch Druckstempel, Mutter und Druckstück gemeinsam in Richtung des Bremsbelags bewegt werden. Die zugehörige Nachstellvorrichtung erstreckt sich quer zur Verschiebungsrichtung des Druckstempels. Wesentlicher Bestandteil der Nachstellvorrichtung ist eine Nachstellwelle, die auf ihrem Umfang mit einer Schrägverzahnung versehen ist, die mit der auf dem Umfang der Mutter ausgebildeten Schrägverzahnung korrespondiert. Über die beiden korrespondierenden Schrägverzahnungen sowie weitere, ebenfalls quer zur Verschiebungsrichtung des Druckstempels angeordnete Bauteile der Nachstellvorrichtung, wie etwa eine Buchse, eine Mutter, eine Spiralfeder usw., wird der eigentliche Nachstelleffekt bewirkt. Durch die zumeist quer zur Verschieberichtung des Druckstempels ausgerichteten Einzelteile der Nachstelleinrichtung weist diese Radbremse eine vergleichsweise raumgreifende Bauweise auf.

Um eine Radbremse für Fahrzeugräder mit einer integrierten Nachstelleinrichtung zu schaffen, die unabhängig von fahrzeugeigenen Energie- oder Signalsystemen zuverlässig arbeitet, und sich durch eine kompakte Bauweise auszeichnet, ist eine Radbremse gemäß einer ersten Definition der Erfindung gekennzeichnet durch ein Gewindeelement, welches ab dem Überwinden eines vorgegebenen Zustellweges den anschließenden Zustellweg zumindest teilweise in einer Verdrehung aufnimmt und zugleich oder bei der Rückstellung auf das Nachstellelement überträgt, welches dadurch gegenüber dem Druckstempel verdreht wird und über die Schraubverbindung den Druckstempel relativ zu dem Nachstellelement verstellt.

Gemäß einer zweiten Definition der Erfindung ist die Radbremse gekennzeichnet durch ein Gewindeelement, ein mit dem Gewindeelement verschraubtes weiteres Gewindeelement, das zwischen einem ersten und einem zweiten Anschlag beweglich ist, und eine federbelastete Kupplung zwischen dem Gewindeelement und dem Nachstellelement.

Bei einer so ausgestalteten Radbremse und insbesondere Scheibenbremse arbeitet die integrierte Nachstelleinrichtung bei vergleichsweise kompakter Bauweise ausschließlich mechanisch und damit unabhängig von den fahrzeugeigenen Energie- und Signalsystemen. Ein Ausfall oder Fehler z.B. im bordeigenen Strom- oder Signalnetz kann die Funktion der in die Bremse integrierten Nachstelleinrichtung nicht beeinträchtigen, so daß insgesamt eine sehr zuverlässig arbeitende Radbremse geschaffen wird.

Mit einer bevorzugten Ausgestaltung wird vorgeschlagen, daß die Verschraubung zwischen den beiden Gewindeelementen eine größere Gewindesteigung als die Schraubverbindung des Nachstellelements aufweist. Durch das Verhältnis der zwei Gewindesteigungen läßt sich der Betrag der Nachstellung voreinstellen. Weiterhin wird vorgeschlagen, daß das Gewindeelement gegenüber dem Bremsgehäuse drehbar aber nichtaxial beweglich angeordnet ist, und daß das weitere Gewindeelement axial beweglich aber verdrehsicher in dem Bremsgehäuse angeordnet ist.

Mit einer weiteren Ausgestaltung wird vorgeschlagen, daß zur Erzeugung der Federkraft eine Feder das Gewindeelement in Richtung auf den Bremsbelag beaufschlagt, und daß sich das eine Ende der Feder gegen das Gewindeelement oder das Nachstellelement, und das andere Ende der Feder gegen ein freilaufendes Axiallager abstützt. Da sich die die Federkraft bereitstellende Feder gegenüber einem freilaufenden Axiallager abstützt, können Drehbewegungen des zweiten Gewindeelements gegenüber dem Nachstellelement nahezu reibungsfrei erfolgen.

Eine weitere Ausgestaltung ist gekennzeichnet durch eine das Nachstellelement in der dem Bremsbelag abgewandten Richtung beaufschlagende Feder. Vorzugsweise stützt sich diese Feder mit ihrem einen Ende gegen das Bremsgehäuse, und mit ihrem anderen Ende gegen ein Axiallager ab. Ein solches Axiallager erlaubt nahezu reibungsfreie Drehbewegungen des Nachstellelementes trotz der Federbelastung.

Das Gewindeelement und das weitere Gewindeelement sind vorzugsweise konzentrisch zueinander angeordnet. Dadurch läßt sich die Nachstelleinrichtung insgesamt kompakt gestalten.

Zur Erzielung einer kompakten Bauweise kann das Gewindeelement in einer Einsenkung oder Kammer des Nachstellelements sitzen, wobei an der Einsenkung bzw. in der Kammer eines der beiden Elemente der Kupplung ausgebildet ist.

Zur Erzielung der kompakten Bauweise trägt auch bei, wenn das Nachstellelement konzentrisch zu den beiden Gewindeelementen angeordnet ist.

Das Nachstellelement kann topfförmig gestaltet und für die Schraubverbindung mit dem Druckstempel mit einem Außengewinde versehen sein. Auch diese Ausgestaltung ist für einen kompakten Aufbau der Nachstelleinrichtung von Vorteil.

In Bezug auf den Druckstempel wird vorgeschlagen, diesen als Doppelstempel auszubilden, dessen beide Einzelstempel über ein Joch miteinander verbunden sind, in dessen Mitte sich die Schraubverbindung mit dem Nachstellelement befindet. Dies ermöglicht eine besonders kompakte Bauweise der Radbremse durch Anordnung der nur einmal vorhandenen Nachstelleinrichtung zwischen den doppelt vorhandenen Druckstempeln. Ferner wird die Bremskraft symmetrisch auf die Bremsbeläge der Radbremse übertragen.

Ferner ist vorgesehen, dass der erste und der zweite Anschlag von benachbarten Gewindeflanken des Gewindeelements gebildet werden. Dies ermöglicht einen Aufbau der Nachstelleinheit aus wenigen Bauteilen, da zur Realisierung der Anschläge keine gesonderten Bauteile erforderlich sind.

Ferner ist vorgesehen, dass die Gewindeelemente über eine Verschraubung miteinander verbunden sind, die ein Gewindespiel aufweist. Das axiale Maß zwischen den beiden durch die Gewindeflanken gebildeten Anschlägen bestimmt das gewünschte Lüftspiel. Die axiale Beweglichkeit des Gewindeelements reicht gerade aus, das Lüftspiel zu überwinden, wohingegen jede über das Erreichen des Anschlags hinausgehende Axialbewegung in einer Drehung des drehbaren Gewindeelements aufgenommen wird.

Ferner ist vorgesehen, dass das Gewindeelement über eine federbelastete Drehmomentkupplung mit dem Nachstellelement gekoppelt ist, so dass die drehfeste Verbindung zwischen Gewindeelement und Nachstellelement bei Überschreiten eines gewissen Drehmoments gelöst wird. Dies ist dann der Fall, wenn die Bremsbeläge das verschleißbedingte Spiel überwunden haben und an der Bremsscheibe anliegen.

Von Vorteil für die Kompaktheit der Nachstelleinrichtung ist, wenn die Drehmomentkupplung konzentrisch zu dem Gewindeelement angeordnet ist.

Ferner ist von Vorteil, wenn das Gewindeelement über eine Einwegkupplung mit dem Nachstellelement gekoppelt ist. Auf diese Weise wirken nur Drehungen des Gewindeelements in die eine Richtung, nicht aber Drehungen in die andere Richtung auf das Nachstellelement.

Das Nachstellelement kann außen mit einer Verzahnung versehen sein. Über die Verzahnung lassen sich die Drehbewegungen des Nachstellelements abgreifen, oder es läßt sich zum Wechsel der Bremsbeläge dessen Rückstellung durchführen. Vorteilhaft ist es, wenn die Verzahnung mit der Verzahnung eines neben dem Nachstellelement angeordneten Zahnrades kämmt. Mit dieser Ausgestaltung wird die Drehbewegung des Nachstellelements auch an einen Ort seitlich der Zuspannung übertragen, der z.B. für ein Werkzeug gut erreichbar ist. Beide Zahnräder können eine Art Über- oder auch Untersetzungsgetriebe bilden, so das die Rückstellung für einen Monteur mit nur geringem Kraftaufwand oder mit wenigen Umdrehungen möglich ist.

Ferner wird vorgeschlagen, dass das Zahnrad mit Eingriffsmitteln zur Rückstellung des Nachstellelements versehen ist. Es ist dann zur Rückstellung nicht erforderlich, den Zuspannhebel der Bremse zu demontieren, um zunächst Zugriff auf die Nachstelleinheit zu erhalten. Es ist von Vorteil, wenn das der Rückstellung dienende Zahnrad an einer seitlichen Erweiterung des Gewindeelements angeordnet ist. Die konstruktive Realisierung der Rückstellung erfordert auf diese Weise nur wenige Bauteile.

Nachfolgend werden verschiedene Ausführungsformen der Radbremse unter Bezugnahme auf die Zeichnungen erläutert. Darin zeigen:
- Fig. 1: einen Schnitt durch den Bremssattel einer Scheibenbremse einschließlich der Bremsscheibe und der Bremsbeläge;
- Fig. 2: in einer Schnittdarstellung (Schnittebene II-II in Fig. 1) den grundsätzlichen Aufbau einer Nachstelleinrichtung einer Scheibenbremse;
- Fig. 3: in verschiedenen Stadien (Fign. 3a bis 3e) die Wirkungsweise der Nachstelleinrichtung nach Fig. 2;
- Fig.4: eine gegenüber der Ausführungsform nach Fig. 2 abgewandelte Ausführungsform der Nachstelleinrichtung;
- Fig. 5: die vergrößert dargestellte Einzelheit "V" der Fig. 4;
- Fig. 6: eine weitere Ausführungsform der Nachstelleinrichtung;
- Fig. 7: eine weitere Ausführungsform der Nachstelleinrichtung;
- Fig. 8: eine weitere Ausführung einer erfindungsgemäßen Nachstelleinrichtung;
- Fig. 9: eine teilweise Schnittdarstellung entlang der Schnittebene IX - IX in Fig. 8;
- Fig. 10: eine Schnittdarstellung entlang der Schnittebene X-X in Fig. 9;
- Fig. 11: eine Explosionsansicht der Einzelteile der Nachstelleinrichtung aus Fig. 9;
- Fig. 12: eine weitere Ausführung einer erfindungsgemäßen Nachstelleinrichtung aus Fig. 12;
- Fig. 13: eine vergrößert dargestellte Einzelheit aus Fig. 12 ;
- Fig. 14: eine Explosionsansicht einiger Einzelteile der Nachstelleinrichtung aus Fig. 12;
- Fig. 15: einen Schnitt durch den Bremssattel einer weiteren Ausführungsform einer Scheibenbremse;
- Fig. 16: eine vergrößert dargestellte Einzelheit der Fig. 15 und
- Fig. 17: eine stark vergrößert dargestellte weitere Einzelheit der Fig. 15.

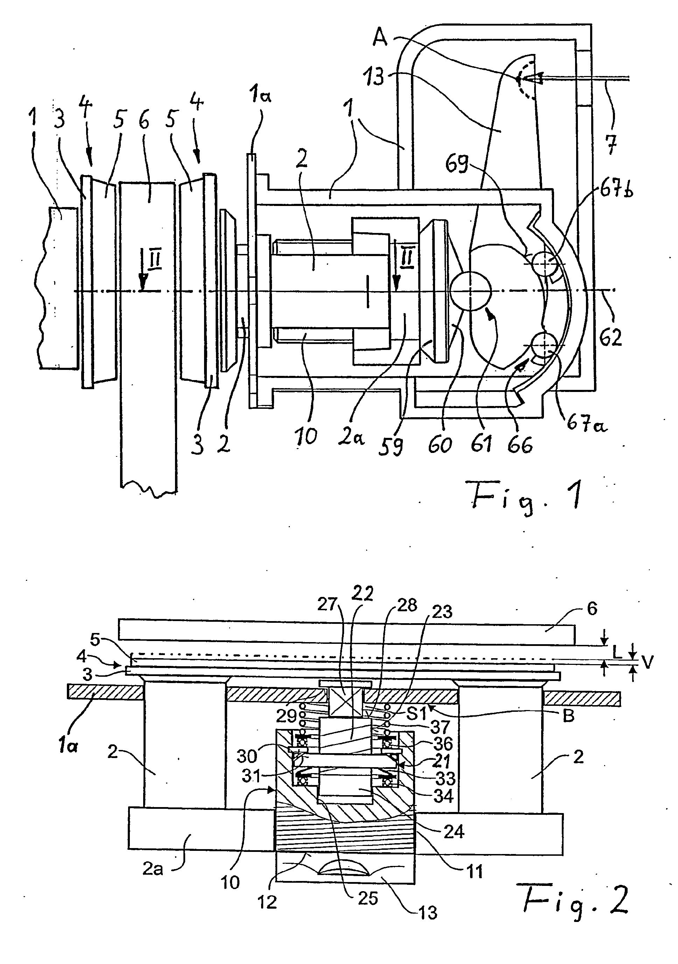

Fig. 1 zeigt in vereinfachter Darstellung einen Teil des Bremsgehäuses 1 einer Fahrzeug-Scheibenbremse, vorzugsweise des Schwimmsattel-Bautyps. Zwei Druckstempel 2 sind innerhalb des Bremsgehäuses 1 über ein quer zu den Druckstempeln verlaufendes Joch 2a miteinander verbunden. Die beiden Druckstempel 2 bilden daher, wie vor allem die Fig. 2 erkennen läßt, einen Doppelstempel, der sich außerhalb des Bremsgehäuses 1 gegen die Rückseite der Belagplatte 3 des Bremsbelags 4 abstützt. Von dem Bremsbelag 4 ist in den Fign. 1 und 2 außerdem der Reibbelag 5 dargestellt, sowie ferner die Bremsscheibe 6 der Scheibenbremse.

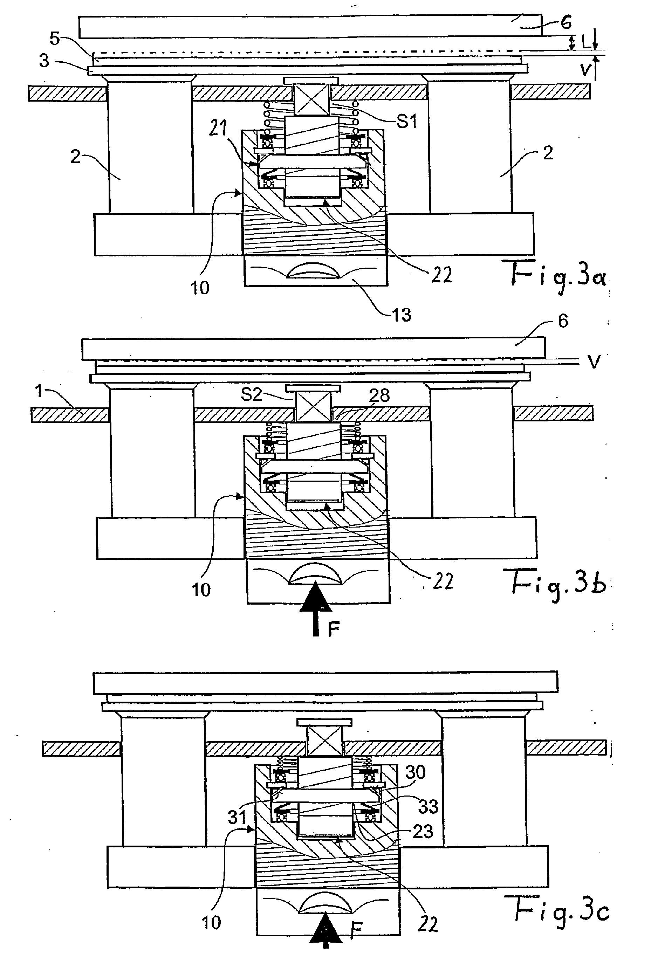

Die im Betrieb mit einem Lüftspiel L (Fign. 2, 3a) auf beiden Seiten der Bremsscheibe 6 arbeitende Scheibenbremse kann mit einer nachfolgend noch näher erläuterten, rein mechanisch arbeitenden Nachstelleinrichtung versehen sein. Zur Übertragung der von einem Bremszylinder und vorzugsweise einem druckluftbetätigten Bremszylinder erzeugten Zuspannkraft ist in dem Bremsgehäuse ein Zuspannhebel 13 verschwenkbar gelagert. Am freien Hebelende bei A kann sich die schematisch dargestellte Betätigungsstange 7 des Bremszylinders abstützen. Wird dieser mit Druck beaufschlagt, verschwenkt der Hebel 13 um seine gehäusefeste Lagerung. Hierbei kommt es über zwischengeschaltete Druckelemente 60, 59 und das Joch 2a zu einem Verschieben der Druckstempel 2 in Richtung Bremsscheibe 6. Einzelheiten der Lagerung und Abstützung des Zuspannhebels 13 werden nachfolgend noch näher erläutert werden.

Entsprechend der Darstellung nach Fig. 2 ist der doppelte Druckstempel 2 in der Mitte seines Joches 2a mit einem Innengewinde versehen, welches zusammen mit einem Außengewinde eines Nachstellelementes 10 eine Schraubverbindung 11 zwischen dem Nachstellelement 10 und den Druckstempeln 2 bildet. Das auf diese Weise platzsparend in der Mitte zwischen den Druckstempeln 2 angeordnete Nachstellelement 10 ist topfförmig gestaltet, wobei die Außenseite seines Bodens eine Druckfläche 12 bildet, gegen die sich der Zuspannhebel 13 einer hier nicht näher dargestellten Zuspanneinrichtung direkt oder - über weitere Bauteile - indirekt abstützt. Diese Zuspanneinrichtung kann z.B. druckluftbetätigt sein, wodurch der Zuspannhebel 13 eine Kraft F auf die Druckfläche 12 des Nachstellelementes 10 ausübt. Die so erzeugte Zuspannkraft F überträgt sich über die Schraubverbindung 11 gleichmäßig auf beide Druckstempel 2 und bewirkt beim Bremsen die Zustellbewegung des Bremsbelags 4 gegenüber der Bremsscheibe 6.

Ebenfalls anhand der Fig. 2 wird im folgenden die integrierte Nachstelleinrichtung erläutert, zu der das Nachstellelement 10 ein wichtiger Bestandteil ist. Weitere Bestandteile der Nachstelleinrichtung sind ein nach Art eines Gewindebolzens gestaltetes Gewindeelement 22 sowie ein nach Art einer Gewindemutter gestaltetes Gewindeelement 21. Das Innengewinde des Gewindeelementes 21 greift in das entsprechend gestaltete Außengewinde des weiteren Gewindeelementes 22. Die so gebildete Verschraubung 23 zwischen den beiden Gewindeelementen 21, 22 weist, wie die Zeichnung erkennen läßt, eine relativ große Steigung auf. Diese Steigung ist insbesondere deutlich größer, als die Gewindesteigung der gleichsinnig ausgebildeten Schraubverbindung 11 zwischen dem topfförmigen Nachstellelement 10 und den Druckstempeln 2. Die Verschraubung 23 ist ferner äußerst reibungsarm gestaltet.

Das Gewindeelement 22 ist im Bereich seines rückwärtigen Endes mit einem zylindrischen Abschnitt 24 versehen, welcher in einer entsprechend dimensionierten Bohrung 25 des Nachstellelementes 10 geführt ist. An seinem anderen, dem Bremsbelag 4 zugewandten Ende ist das Gewindeelement 22 mit einer Verdrehsicherung versehen sowie ferner mit Mitteln, welche den axialen Weg des Gewindeelementes 22 begrenzen. Zur Verdrehsicherung ist dieses Ende des Gewindeelementes 22 mit einem Vierkant 27 versehen, welcher durch eine entsprechende vierkantige Öffnung des Bremsgehäuses 1 hindurchragt und dort zwar eine axiale Beweglichkeit, jedoch keine Verdrehung zuläßt. Zur Begrenzung der Beweglichkeit des Gewindeelementes 22 sind daran sowie entsprechend an dem Bremsgehäuse 1 ein erster Endanschlag 28 und ein zweiter Endanschlag 29 ausgebildet. Entsprechend ergeben sich ein erster Spalt S1 und ein zweiter Spalt S2 (Fig. 3b). Bewegt sich das erste Gewindeelement 22 in Richtung auf den Bremsbelag 4, so verringert sich der erste Axialspalt S1, bis der erste Endanschlag 28 erreicht ist. Entfernt sich umgekehrt das Gewindeelement 22 von dem Bremsbelag 4, wird der zweite Axialspalt S2 überwunden, bis der zweite Endanschlag 29 diese Axialbewegung begrenzt.

Das andere, nach Art einer Gewindemutter gestaltete Gewindeelement 21 ist, dem Bremsbelag 4 zugewandt, mit einer Druckfläche 30 einer Reibkupplung versehen. Mit der als Kupplung dienenden Druckfläche 30 vermag sich das Gewindeelement 21 an einer als Gegenkupplung dienenden Gegendruckfläche 31 des Nachstellelements 10 reibschlüssig abzustützen. Beim Ausführungsbeispiel sind Druckfläche sowie Gegendruckfläche ringförmig und, zwecks Erhöhung der Reibung an den Kupplungsflächen 30 und 31, leicht konisch gestaltet.

Auf der anderen, d.h. dem Bremsbelag 4 abgewandten Seite, stützt sich eine Druckfeder 33 gegen das Gewindeelement 21. Beim Ausführungsbeispiel ist diese Druckfeder 33 eine das Gewindeelement 22 ringförmig umgebende Tellerfeder. Diese stützt sich wiederum mit ihrem anderen Ende an einem Axiallager 34 ab, welches sich seinerseits an dem Nachstellelement 10 abstützt. Bei dem hier dargestellten Ausführungsbeispiel ist das Axiallager 34 ein Wälzlager.

Ein zweites Axiallager 36 in Gestalt eines Wälzlagers stützt sich an dem Nachstellelement 10 ab und wird andererseits durch eine Druckfeder 37 beaufschlagt, die sich mit ihrem anderen Ende gegen das Bremsgehäuse 1 abstützt. Die Feder 37 ist beim Ausführungsbeispiel eine das Gewindeelement 22 umgebende Schraubenfeder. Dadurch, daß die Feder 37 nur unter Zwischenlage des Axiallagers 36 auf das Nachstellelement 10 einwirkt, ergibt sich eine dauernde, jedoch in Drehrichtung nahezu reibungsfreie Axialkraft auf das Nachstellelement, wodurch dessen funktionssichere Rückstellung sicher gestellt wird.

Ebenso führt auch die Abstützung der anderen Druckfeder 33 an dem dortigen Axiallager 34 zu einer dauernden Axialkraft auf das Gewindeelement 21, wobei auch diese Axialkraft in Drehrichtung nahezu reibungsfrei ist. Groß ist hingegen die Reibung der von der Druckfläche 30 und der Gegendruckfläche 31 gebildeten Reibkupplung, solange sich das Gewindeelement 21 gegen das Nachstellelement 10 abstützt. Die Druckfläche 30 und die Gegendruckfläche 31 sind somit Bestandteile eines Kupplungsmechanismus, der eine Verbindung zwischen dem Außengewinde des Nachstellelements 10 und dem Innengewinde des Gewindeelements 21 herzustellen vermag bzw. beide Bauteile zu einer Einheit zusammenfügt, wobei diese Verbindung andererseits auch wieder aufgehoben werden kann, so daß beide Bauteile gegeneinander drehbar sind. Die Gewindeelemente 21, 22 sind konzentrisch zu dem Nachstellelement 10 angeordnet, was zu einer kompakten, in den Druckstempel 2 integrierten Bauweise führt.

Anhand der Fign. 3a bis 3e wird im folgenden die Funktion der Nachstelleinrichtung erläutert.

Fig. 3a zeigt den Ruhezustand der Bremse nach einer Betätigung, bei der sich der Bremsbelagverschleiß V eingestellt hat, weshalb beim nächsten Bremsvorgang eine zumindest teilweise Nachstellung erfolgen soll. Der Abstand zwischen dem Reibbelag 5 und der Bremsscheibe 6 ergibt sich dabei durch die Summe der Maße des gewünschten Lüftspiels L und des zu kompensierenden Verschleißes V.

Unter der Wirkung der Zuspannkraft F wird bei Beginn des Bremsvorgangs gemäß Fig. 3b das Nachstellelement 10 mitsamt den beiden Gewindeelementen 21, 22 sowie den Druckstempeln 2 in Richtung auf die Bremsscheibe 6 und entgegen der Kraft der Feder 37 verschoben, bis der Endanschlag 28 des ersten Gewindeelements 22 an dem Bremsgehäuse 1 anliegt. Diese Position ist in Fig. 3b dargestellt. Wie Fig. 3b zu entnehmen ist, hat der erste Axialspalt in dieser Position die Größe Null erreicht, wohingegen der zweite Axialspalt S2 sein Maximum erreicht hat.

Wird gemäß Fig. 3c das Nachstellelement 10 nun zur Überwindung des Verschleißes V weiterhin mit der Zuspannkraft F beaufschlagt, so verschiebt es sich relativ zu dem nunmehr axial blockierten ersten Gewindeelement 22, bei gleichzeitiger Annäherung der Druckstempel 2 an die Belagplatte 3. Das Gewindeelement 21 hebt dabei aufgrund seiner Verbindung mit dem weiteren Gewindeelement 22 von der Gegendruckfläche 31 des Nachstellelementes 10 ab. Durch die Wirkung der Feder 33 und aufgrund der großen Gewindesteigung der Verschraubung 23 wird das Gewindeelement 21 gegenüber dem feststehenden Gewindeelement 22 leichtgängig im Uhrzeigersinn verdreht, so daß es sich, getrieben von der Feder 33, wieder gegen die Gegendruckfläche 31 des Nachstellelements 10 schraubt. Das Gewindeelement 21 macht im angehobenen Zustand die gleiche Axialbewegung wie das Nachstellelement 10, bis der Bremsbelag 4 nach Überwindung des Verschleißes V in Anlage an der Bremsscheibe 6 gelangt. Diese Position ist in Fig. 3c dargestellt. Am Ende des Zuspannens wird die Kupplungsfläche 31 des Nachstellelements 10 über die erste Druckfeder 33 wieder fest auf die Kupplungsfläche 30 des zweiten Gewindeelementes 21 gedrückt, weshalb Gewindeelement 21 und Nachstellelement 10 wieder einkuppeln.

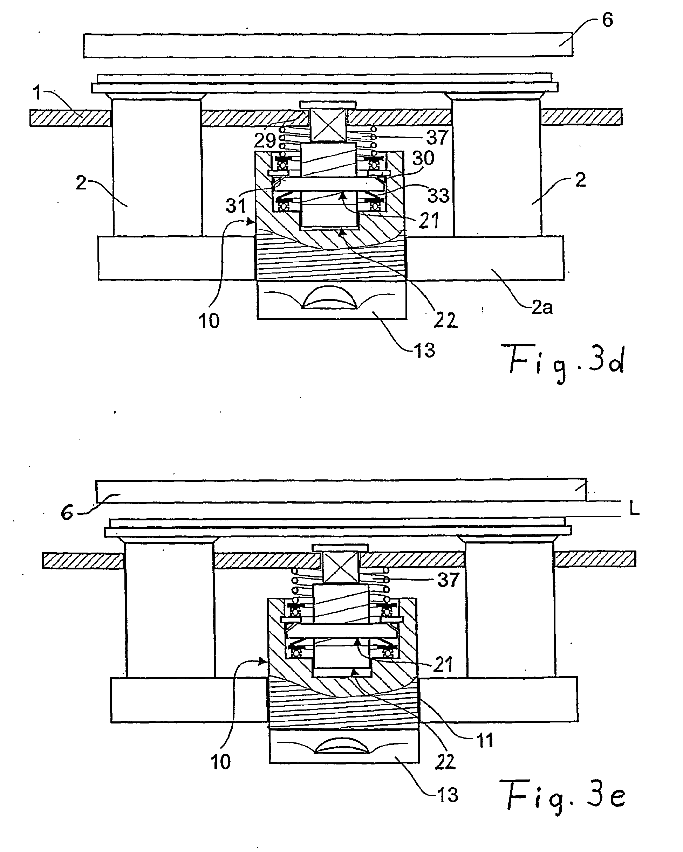

Mit Beendigung des Bremsvorgangs entfällt die Zuspannkraft F, Fig. 3d. Durch die Kraft der Druckfeder 37 wird zunächst die gesamte Nachstelleinrichtung mitsamt den Druckstempeln 2 zurückgeschoben, bis das Gewindeelement 22 mit seinem Anschlag 29 an das den Fixpunkt bildende Bremsgehäuse 1 stößt. Das Gewindeelement 22 ist von diesem Zeitpunkt an gegen eine weitere Zurückbewegung blockiert.

Bei der weiteren Zurückbewegung des Nachstellelementes 10 gemäß Fig. 3e ist die Kraft der Druckfeder 37 ausreichend dimensioniert, um dann das Gewindeelement 21 und das Nachstellelement 10 als Einheit und entgegen dem Uhrzeigersinn relativ zu dem axial blockierten Gewindeelement 22 zu verdrehen, Fig. 3e. Durch die Schraubverbindung 11 wird gleichzeitig mit dem Drehen des Nachstellelementes 10 das Joch 2a mit den beiden Druckstempeln 2 bewegt bzw. nachgestellt, und zwar in Richtung auf die Bremsscheibe 6.

Durch die begrenzte Beweglichkeit des Gewindeelementes 22 zwischen dessen erstem Endanschlag 28 und seinem zweiten Endanschlag 29 kann daher das gewünschte Lüftspiel zwischen den Bremsbelägen 4 und der Bremsscheibe 6 eingestellt werden bzw. wird dieses im Betrieb der Scheibenbremse laufend nachgestellt. Die Anordnung der beiden als Fixpunkte dienenden Anschläge 28, 29 ist beim Ausführungsbeispiel in einem Bereich B des Bremsgehäuses 1 (vergleiche Fig. 2), der sich zwischen dem Bremsbelag und der Nachstelleinrichtung befindet. Denn in diesem Bereich B ist das Bremsgehäuse weitgehend frei von Gehäuseverformungen infolge der Bremskräfte. Solche in der Praxis kaum vermeidbaren Verformungen sind daher ohne Einfluß auf die Genauigkeit der Nachstellung. Auch auf der anderen Seite der Bremsscheibe 6 muss das dortige Lüftspiel durch die beschriebene Nachstellung überwunden werden, da auch der dortige Bremsbelag einem Verschleiß unterliegt.

Durch das Verhältnis der Gewindesteigung der Schraubverbindung 11 und jener der Schraubverbindung 23 wird vorgegeben, inwieweit bei einem Bremsvorgang das Verschleißmaß kompensiert wird bzw. wie weit die Druckstempel 2 relativ gegenüber dem Nachstellelement 10 in Richtung der Bremsscheibe 6 verstellt werden. Zum Beispiel kann die Nachstellung eines sich einstellenden Verschleißes V über mehrere Bremsvorgänge verteilt nachgestellt werden.

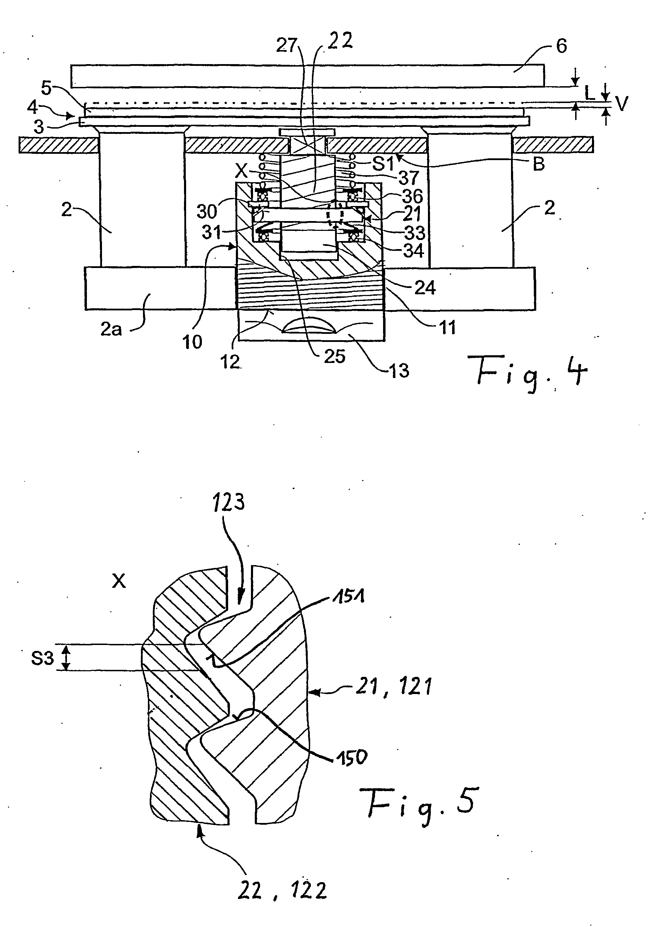

In den Figuren 4 und 5 ist anhand einer weiteren Ausführungsform eine weitere Möglichkeit dargestellt, das Lüftspiel L in der Nachstellung abzubilden. Anstelle der bei dem vorherigen Ausführungsbeispiel vorgesehen axialen Beweglichkeit des Gewindeelements 22 über den Axialspalt S1 bzw. S2 kann das Außengewinde des Gewindeelements 22 mit einem Axialspiel S3 gegenüber dem Innengewinde des Gewindeelements 21 ausgebildet sein. Das in Figur 5 stark vergrößerte Axialspiel S3 entspricht dem Lüftspiel L. Bei der Ausführungsform nach den Figuren 4 und 5 ist es vorteilhaft, dass das Gewindeelement 22 völlig fest mit dem Bremsgehäuse verbunden werden kann.

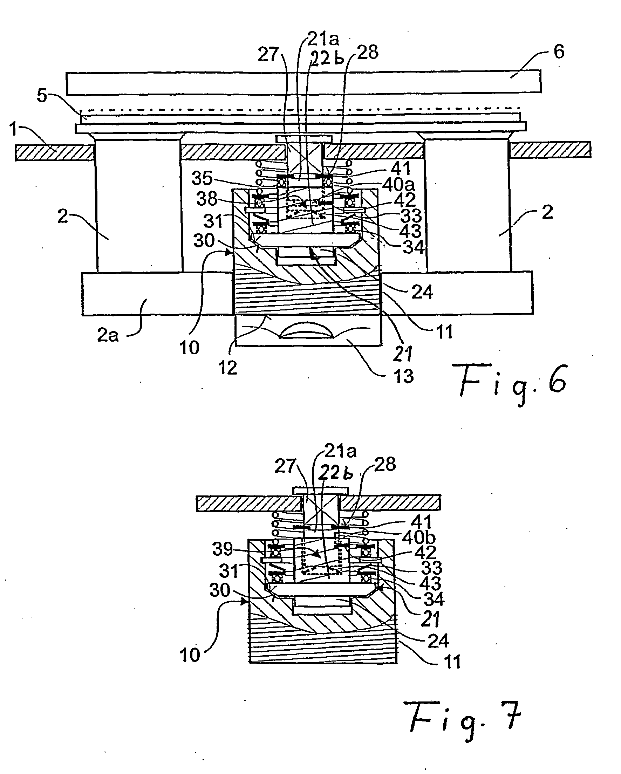

Eine weitere Ausführungsform zeigen die Figuren 6 und 7. Dort ist das Prinzip der Erfindung in der Weise umgesetzt, daß die zuvor beschriebene Verstellung bzw. Nachstellung des Druckstempels 2 gegenüber dem Nachstellelement 10 bei, d.h. während der Zuspannung erfolgt. Wiederum wird das Gewindeelement 21 nach Erreichen des Endanschlages 28 des Gewindeelements 22 verdreht. Durch die umgekehrte Anordnung der Kupplung 30, 31 und 33, bei der die Druckfeder 33 entgegengesetzt der Zuspannung wirkt, wird allerdings das Nachstellelement 10 direkt mitgedreht, und der Druckstempel 2 relativ zu diesem verstellt. Erreicht der Reibbelag 5 der Bremsbeläge die Bremsscheibe 6, so ist der Nachstellvorgang beendet und die Gegenkraft steigt an und blockiert die Verdrehung des Nachstellelementes 10 gegenüber dem Zuspannhebel 13 in der Druckfläche 12 wie auch gegenüber dem Joch 2a in der Schraubverbindung 11.

Ab Erreichen des Reibbelags 5 bewirkt das weitere Ansteigen der Zuspannkraft ein Kompensieren des Spiels aller im Kraftfluss liegenden Verbindungsstellen, sowie eine elastische Verformung des Bremsgehäuses 1 insbesondere in dessen hinterem Bereich, wie auch eine elastische Verformung des Jochs 2a. Um dies auszugleichen, muss der Zuspannhebel 13 bis zum Erreichen der eigentlichen Bremskraft eine weitere Schwenkbewegung ausführen bzw. das Nachstellelement 10 weiter nach vorne treiben. Diese axiale Bewegung wäre aber durch die geschlossene Kupplung 30, 31, 33 bzw. durch das in diesem Zustand dreh- und somit axialfeste Gewindeelement 21 und das festgesetzte Nachstellelement 10 blockiert, wäre bei diesem Ausführungsbeispiel (Figur 6) das Gewindeelement 22b nicht ab einer voreingestellten Kraft gegenüber dem feststehenden Gewindeelement 21 a zum Beispiel drehbar verbunden.

Eine Realisierungsmöglichkeit für die Nachstellung zeigt die Figur 6. Hierbei ist die Verbindung zwischen dem Gewindeelement 21 a und dem Gewindeelement 22b mittels einer Rutschkupplung 38 realisiert. Das mit einer umlaufenden Nut 40a versehene Gewindeelement 21 a ist in einem Sackloch des Gewindeelements 22b aufgenommen. Ein mit dem Gewindeelement 22b verbundener Stift 42 greift in die Nut 40a ein und hält die zwei Teile zwar in Längsrichtung zueinander fixiert, aber zugleich zueinander drehbar. Eine sich einerseits auf dem Boden des Sacklochs und andererseits auf der Stirnfläche des Gewindeelements 21 a abstützende Druckfeder 43 ist so vorgespannt, dass ein Verdrehen des Gewindeelements 22 erst ab einer größeren als der zum Verdrehen des Nachstellelements 10 notwendigen Kraft möglich ist. Wird diese Kraft überschritten bzw. gibt die Rutschkupplung 38 frei, werden das Nachstellelement 10 sowie das Gewindeelement 21 unverdreht axial nach vorne verschoben und das Gewindeelement 22b über das feststehende Gewindeelement 21 a und auf einem Axiallager 35 verdreht. Das Axiallager 35 stützt sich auf einem mit dem Gewindeelement 21a verbundenen Sprengring 41 ab und stellt bei diesem Teilvorgang das leichtgängige Drehen sicher. Der Sprengring 41 dient hier als Endanschlag 28.

Letztlich arbeitet die Ausführungsform nach Figur 7 nach dem gleichen Prinzip, wie die Ausführungsform nach Figur 6. Mit Erreichen einer voreinstellbaren Kraft wird das beschriebene Freigeben von einem axialen Weg über ein axiales Nachgeben des Gewindeelements 22b erreicht.

Die Verbindung zwischen dem Gewindeelement 21a und Gewindeelement 22b ist durch eine Druckkupplung 39 realisiert. Das mit einer axial verlaufenden Nut 41 b versehene Gewindeelement 21a ist in einem Sackloch des Gewindeelements 22b aufgenommen. Ein mit dem Gewindeelement 22b verbundener Stift 42 greift in die Nut 41b ein und hält die zwei Teile axial begrenzt verschiebbar, aber drehfest ineinander. Eine sich einerseits auf dem Boden des Sacklochs und andererseits auf der Stirnfläche des Gewindeelements 21a abstützende Druckfeder 43 ist so vorgespannt, dass ein axiales Verschieben des Gewindeelements 22b erst ab einer größeren als zum Verdrehen des Nachstellelements 10 notwendigen Kraft möglich ist. Wird diese Kraft überschritten bzw. gibt die Druckkupplung 39 frei, werden das Nachstellelement 10, das Gewindeelement 21 und das Gewindeelement 22b unverdreht axial über das feststehende Gewindeelement 21 a nach vorne verschoben. Der Endanschlag 28 befindet sich dabei an einem mit dem Gewindeelement 21 a verbundenen Sprengring 41.

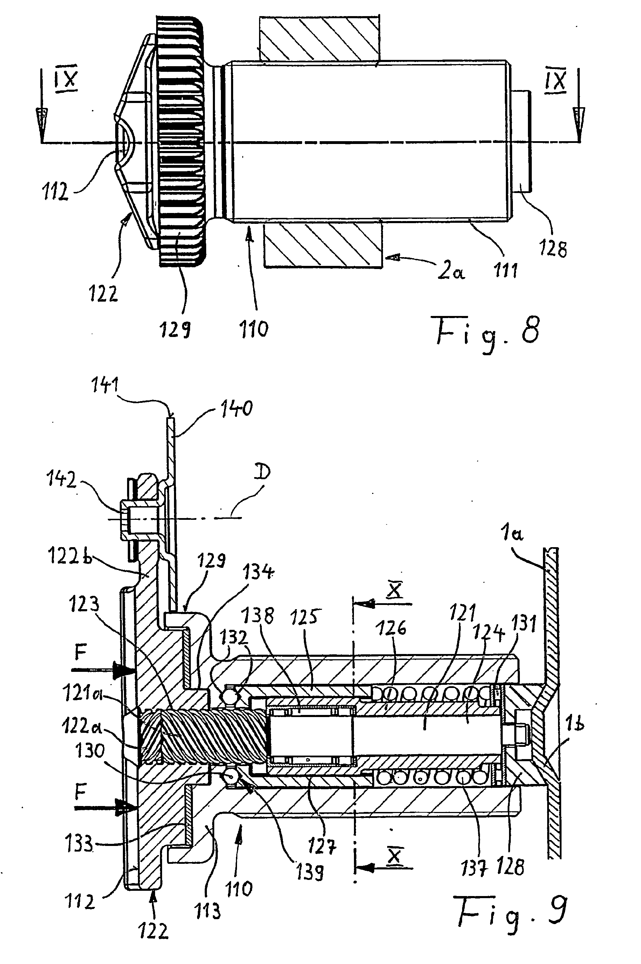

Eine weitere Ausführungsform einer Nachstelleinrichtung für eine Scheibenbremse wird nachfolgend anhand der Figuren 8 bis 11 erläutert. Ferner ist für die Erläuterung dieser Ausführungsform auch die Fig. 5 mit den im Gewinde realisierten Endanschlägen nochmals von Bedeutung.

Fig. 8 zeigt schematisch das die beiden Druckstempel miteinander verbindende Joch 2a, welches wiederum nach Art einer Traverse gestaltet ist und sich in der Darstellung der Fig. 8 aus der Zeichenebene hinaus bzw. in diese hinein erstreckt. Das Nachstellelement 110 ist von der Seite her betrachtet von in etwa pilzförmiger Gestalt und weist auf einem Großteil seiner Länge ein Außengewinde auf, das gemeinsam mit einem Innengewinde der Traverse bzw. des Jochs 2a eine Schraubverbindung 111 bildet. Am zuspannseitigen Ende weist die Nachstelleinrichtung ein als eine Druckplatte gestaltetes Gewindeelement 122 auf. Daran ist eine muldenförmige Druckfläche 112 ausgebildet, also eine in etwa halbzylindrische Ausnehmung, die sich parallel zum Joch 2a erstreckt und an der sich der Zuspannhebel, etwa der Zuspannhebel 13 der Fig. 1, gelenkig abstützt. Auf diese Weise wird die Zuspannkraft F auf das als Druckplatte gestaltete Gewindeelement 122 übertragen. Fig. 8 lässt ferner erkennen, dass das Nachstellelement 110 zum Zwecke der Rückstellung der Nachstelleinrichtung mit einer Außenverzahnung 129 versehen ist. Auf deren Funktion wird später noch eingegangen werden.

Fig. 9 zeigt im Schnitt die wesentlichen Elemente der Nachstelleinrichtung, nämlich das Nachstellelement 110 selbst, das erste Gewindeelement 121, das weitere Gewindeelement 122, zwei Hülsen 125, 126, eine Einwegkupplung 138 und eine Drehmomentkupplung 139. Zusätzlich dargestellt ist ein der Rückstellung beim Bremsbelagwechsel dienendes Zahnrad 140. Diese Teile sind in Fig. 9 geschnitten gezeichnet. Nicht geschnitten eingezeichnet ist lediglich das als zentraler Gewindebolzen gestaltete erste Gewindeelement 121. Dieses ist mit seinem einen Ende derart gegenüber einem Deckel 1a des Bremssattels oder Bremsgehäuses festgelegt, dass sich das erste Gewindeelement 121 zwar in axialer Richtung nicht bewegt, es aber um seine eigene Achse drehbar ist. Der Deckel 1a des Bremsgehäuses 1 ist dort wo sich das bolzenförmige Gewindeelement 121 abstützt, mit einer den notwendigen Formschluß bietenden Prägung 1b versehen. Diese Prägung 1b vermeidet eine dortige Öffnung in dem Deckel 1 a, durch die Staub in das Innere des Bremsgehäuses 1 gelangen könnte.

An seinem anderen Ende ist das Gewindeelement 121 mit einem Außengewindeabschnitt 121 a mit großer Steigung versehen. Das andere Gewindeelement 122 ist axial im Bremssattelgehäuse beweglich und bildet zugleich jene Druckplatte, mittels der die Bremskraft F bei der Zuspannung auf das Nachstellelement 110 übertragen wird. Zur Bildung einer Schraubverbindung wie der in Fig. 5 dargestellten Schraubverbindung 123 weist das weitere Gewindeelement 122 einen Innengewindeabschnitt 122a auf, in welchen der Außengewindeabschnitt 121 a des Gewindeelements 121 greift. Die so gebildete Schraubverbindung 123 weist eine verglichen mit der Schraubverbindung 111 große Gewindesteigung auf. Darüber hinaus weist die Schraubverbindung 123 ein axiales Gewindespiel S3 (Fig. 5) zwischen den so gebildeten zwei Anschlägen auf. Das Gewindespiel S3 der Verschraubung 123 und die beiden daraus resultierenden Anschläge sind daher prinzipiell wie bereits in Fig. 5 dargestellt. Betragsmäßig entspricht das Gewindespiel S3 in etwa dem gewünschten Lüftspiel L.

Mit Einleitung eines Bremsvorgangs, d.h. bei einer Zuspannkraft F auf die Druckfläche 112 des Gewindeelements 122, bewegt sich dieses und das an ihm axial spielfrei anliegende Nachstellelement 110 unter Mitnahme der über die Schraubverbindung 111 an dem Nachstellelement 110 befestigten Druckstempel 2 in Richtung zu der Bremsscheibe hin. Dabei wird die Zuspannkraft F zunächst noch nicht auf das zentrale Gewindeelement 121 übertragen.

Eine Übertragung der Zuspannkraft auf das Gewindeelement 121 erfolgt vielmehr erst nach Überwindung des Lüftspiels S3 (Fig. 5), sobald nämlich die Innen- und Außengewinde 121a, 122a der Gewindeelemente 122, 121 mit ihren Gewindeflanken aneinander zur Anlage gelangen. Die Gewindeflanken 150, 151 des axial nicht beweglichen Gewindeelements 121 bilden hierbei die Endanschläge für das axial bewegliche Gewindeelement 122, zwischen denen es gegenüber dem Gewindeelement 121 axial hin und her bewegt werden kann, ohne eine Drehbewegung des Gewindeelements 121 zu bewirken. Aufgrund der relativ steilen Gewindeverbindung 123 zwischen dem axial beweglichen Gewindeelement 122 und dem axial unbeweglichen Gewindeelement 121 beginnt sich das Gewindeelement 121 unter der Wirkung der Zuspannkraft zu drehen, sobald das Gewindeelement 122 den einen Endanschlag, d.h. die Gewindeflanke 151 des Gewindeelements 121, erreicht hat.

Die so dem Gewindeelement 121 aufgezwungene Drehbewegung entspricht dem Bremsverschleiß und wird in der einen Richtung über die Einwegkupplung 138 auf die Innenhülse 126 übertragen, d.h. die Innenhülse 126 folgt in der einen Drehrichtung der Drehung des Gewindeelements 121. In der umgekehrten Drehrichtung hingegen arbeitet die Einwegkupplung nicht, das Gewindeelement 121 dreht gegenüber der Innenhülse 126 frei durch. Als Einwegkupplung 138 kann zum Beispiel ein Freilauf oder auch eine Schlingfeder dienen.

Alternativ kann die Einwegkupplung / der Freilauf im Weg bzw. Kraftfluß zwischen der Außenhülse 125 und der Innenhülse 126 angeordnet sein.

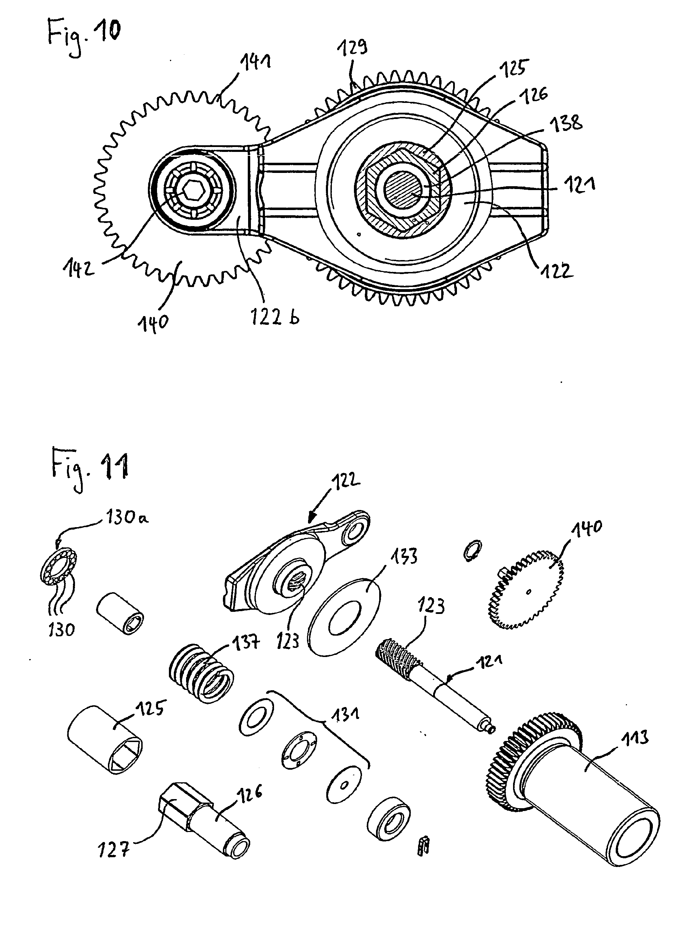

Über einen Dreh-Formschluß in Gestalt einer Mehrkantführung 127 ist die Innenhülse 126 so innerhalb einer kürzeren Außenhülse 125 geführt, dass sich Außen- und Innenhülse 125, 126 stets gemeinsam drehen, wohingegen Axialverschiebungen zwischen beiden Hülsen 125, 126 möglich sind. Die Mehrkantführung 127 ist hier eine Sechskantführung, die an der Außenseite der Innenhülse 126 sowie entsprechend auch der Innenseite der Außenhülse 125 angeformt ist, vgl. hierzu Fign. 10 und 11.

Die durch eine Feder 137 axial druckbelastete Außenhülse 125 ist im Querschnitt in etwa topfförmig, wobei der der Druckfeder 137 abgewandte Boden des Topfes eine zentrale Öffnung zur Durchführung des Gewindeelements 121 aufweist. Stirnseitig ist der Boden der Außenhülse 125 mit einer Vielzahl über seinen Umfang verteilter Ausnehmungen 132 versehen, die gemeinsam mit gegenüberliegenden Ausnehmungen 132, die sich an dem Nachstellelement 110 befinden, Lagerschalen für darin liegende Kugelkörper 130 bilden. Die Kugelkörper 130 sind in einem gemeinsamen Kugelkäfig 130a (Fig. 11) zusammengefaßt.

Von der anderen Seite her wird die Außenhülse 125 über die Druckfeder 137 mit einer Federkraft beaufschlagt, welche die Kugelkörper 130 normalerweise innerhalb ihrer Lagerschalen 132 hält. Die Druckfeder 137 ist an ihrem der Außenhülse 125 abgewandten Ende über ein reibungsarm arbeitendes Wälzlager 131 axial abgestützt. Auf diese Weise ist die Feder 137 gemeinsam mit den Kugelkörpern 130 Bestandteil einer Drehmomentkupplung 139, die das Nachstellelement 110 drehmomentabhängig mit der Außenhülse 125 und somit letztlich mit dem Gewindeelement 121 koppelt. Dabei werden die Drehbewegungen des Gewindeelementes 121 und der Außenhülse 125 nur bis zu einem bestimmten Drehmoment-Grenzwert, der von der Federkonstanten der Druckfeder 137 und der Tiefe der Ausnehmungen 132 für die Kugeln abhängt, auf das Gehäuse 113 des Nachstellelements 110 übertragen, wodurch das Joch 2a über die Schraubverbindung 111 in Richtung der Bremsscheibe nachgestellt wird. Übersteigt das Drehmoment an der Drehmomentkupplung 139 den Grenzwert, z.B. wenn die Bremsbeläge in Anlage an die Bremsscheibe gelangen, so verlassen die Kugeln 130 ihre Ausnehmungen 132, die Druckfeder 137 wird gestaucht, und die Außenhülse 125 verdreht sich gegenüber dem Gehäuse 113. Dies hat zur Folge, dass die Drehbewegung des Gewindeelements 121 nicht auf das Nachstellelement 110 übertragen wird. Die Federkonstante der Druckfeder 137 sowie die Arbeitscharakteristik der Überlast- bzw. Drehmomentkupplung 139 ist so gewählt, dass diese immer dann durchrutscht, wenn die Druckstempel so weit zugestellt sind, dass die Bremsbeläge an der Bremsscheibe anliegen.

Nach Beendigung des Bremsvorgangs, d.h. bei Wegfall der Kraft F, wird das Gewindeelement 122 über die Druckfeder 137 gemeinsam mit dem Nachstellelement 110 in die Ausgangslage gegen den zweiten Endanschlag zurück bewegt.

Mit zunehmendem Verschleiß der Bremsbeläge wird die Traverse 2a durch Drehen des Nachstellelements 110 über die Schraubverbindung 111 sukzessive in Richtung der Bremsscheibe bewegt. Bei einem Bremsbelagwechsel ist es daher erforderlich, die Nachstelleinrichtung wieder in ihre Ausgangsstellung zurückzustellen. Um dem Monteur die Rückstellung zu erleichtern, ist das Nachstellelement 110 mit einer äußeren Verzahnung 129 versehen, die mit einer Außenverzahnung 141 eines Zahnrads 140 kämmt, das in einer Öffnung einer seitlichen Erweiterung des Gewindeelements 122 um eine Drehachse D drehbar gelagert ist. Das Zahnrad 140 ist für den Monteur von außerhalb des Bremsgehäuses gut zugänglich.

Wie Fig. 10 dies erkennen lässt, ist das Zahnrad 140 mit Eingriffsmitteln 142 für ein Montagewerkzeug, beispielsweise einen Sechskant o.ä. Standart Werkzeug, versehen. Durch Verdrehen des Zahnrades 140 wird das Nachstellelement 110 in Drehung versetzt, wodurch es sich über die Schraubverbindung 111 wieder tiefer in das Joch 2a hinein dreht, so dass die Traverse bzw. das Joch 2a in die Ausgangsstellung gelangt, in welcher der Abstand zwischen Druckstempeln und Bremsscheibe maximal ist. Hierbei muß die Drehmomentkupplung 139 überwunden werden, was durch das Überrutschen der Kugeln 130 gut hörbar ist.

Zur Reduktion der bei der Relativdrehung auftretenden Reibung zwischen dem Nachstellelement 110 und dem als Druckplatte für das Nachstellelement dienenden Gewindeelement 122 ist zwischen beiden Bauteilen eine scheibenförmige Gleitlagerung 133 eingesetzt. Zwecks besserer Zentrierung der Druckplatte zu dem Nachstellelement greift ein zylindrischer Zentrieransatz 134 der Druckplatte 122 in eine entsprechende Bohrung in dem Nachstellelement 110.

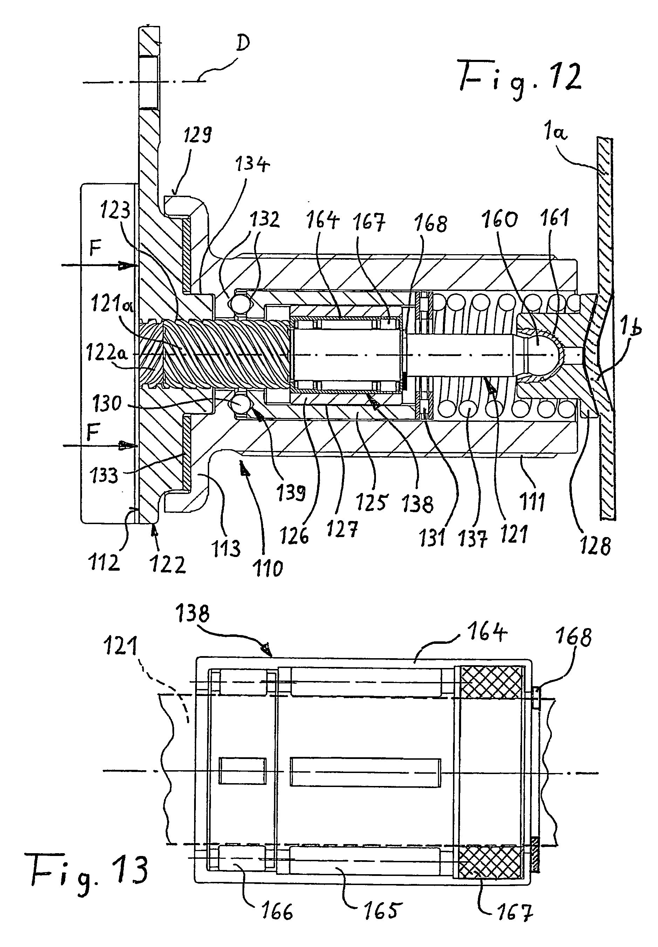

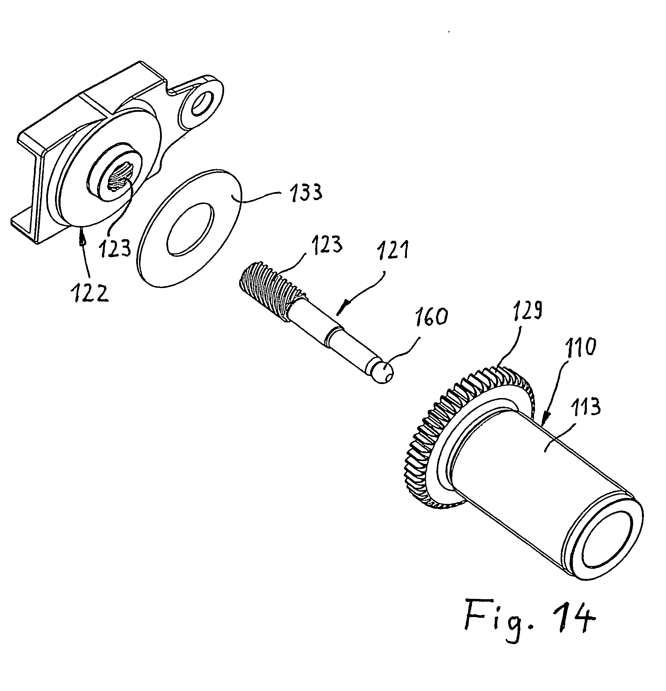

Eine weitere Ausführungsform ist in den Fign. 12 bis 14 dargestellt. Diese Ausführungsform entspricht in ihrem Grundaufbau jener der Fign. 8 bis 11, jedoch bestehen einige konstruktive Unterschiede, und nur auf diese wird im folgenden eingegangen. Die Bezifferung der einzelnen Bauteile entspricht, soweit sie die gleiche Funktion ausüben, der vorangegangenen Ausführungsform nach den Fign. 8 bis 11.

Bei der Ausführungsform nach den Fign. 12 bis 14 ist zunächst die Anordnung der Druckfeder 137 und des axial wirkenden Wälzlagers 131 vertauscht. Das Wälzlager 131 stützt sich gegen die äußere Hülse 125 ab, wohingegen sich die Druckfeder 137 unmittelbar gegen das Bremssattelteil 128 abstützt. Anders als bei der vorangegangenen Ausführungsform dreht die Feder 137 daher nicht mit.

Ein weiterer Unterschied besteht in der Abstützung des zentral angeordneten, bolzenförmigen Gewindeelementes 121. Dieses endet an seinem dem Deckel 1 a des Bremsgehäuses zugewandten Ende in einem Kugelzapfen 160. Der Kugelzapfen 160 sitzt in einer aus Kunststoff bestehenden Kugelpfanne 161. Die Kugelpfanne 161 sitzt fest in dem Bremssattelteil 128. Um diesen festen Sitz zu erreichen, kann die Kugelpfanne 161 mit einer Außenverrippung versehen sein, welche formschlüssig in einer entsprechend gestalteten Nut des Bremssattelteils 128 sitzt. Die Zeichnung lässt erkennen, dass die Kugelpfanne 161 den Kugelzapfen 160 des Gewindeelementes 121 auf einem Kugelabschnitt von mehr als 180° umschließt. Vorzugsweise beträgt der Umschließungsgrad 200° bis 210°. Auf diese Weise ist der Kugelzapfen 160 gegen ein axiales Herausziehen aus der Kugelpfanne 161 gesichert, gleichzeitig lässt sich der Kugelzapfen 160 in der Kugelpfanne 161 drehen. Diese Drehung erfolgt mit einem gewissen Reibmoment, dessen Stärke von der Materialpaarung Kugelzapfen/Kugelpfanne abhängt. Die Größe dieser Reibung und damit ein geringer Widerstand beim Drehen des zentralen Gewindeelementes 121 um seine Längsachse ist genau toleriert.

Eine weitere Besonderheit der Ausführungsform nach den Fign. 12 bis 14 ist die im Vergleich zu der vorangegangenen Ausführungsform verkürzte Gestaltung der über die Mehrkantführung 127 in der äußeren Hülse 125 geführten inneren Hülse 126. Die innere Hülse 126 ist nur so lang, wie die Einwegkupplung 138. Die Hülse 126 ist ferner mit dem Gehäuse 164 der Einwegkupplung 138 drehfest verbunden, z.B. durch einen leichten Presssitz.

Die Fig. 13 zeigt Einzelheiten der hier verwendeten Einwegkupplung 138. Deren durch einen Sicherungsring 168 axial gesichertes Gehäuse 164 umschließt drei Längssektionen. In der mittleren Sektion befinden sich die Sperrkörper 165 der Einwegkupplung. In der linken Sektion befinden sich mehrere Wälzkörper 166, die in diesem Bereich das Gewindeelement 121 nahezu reibungsfrei lagern, ohne in eine der beiden Drehrichtungen eine Sperrwirkung zu erzeugen. Die in Fig. 13 rechte Längssektion nimmt einen Reibring 167 auf. Dieser erzeugt eine geringe, jedoch genau reproduzierbare Reibung zwischen der Einwegkupplung und dem zentralen Gewindeelement 121. Zu diesem Zweck besteht der Reibring 167 vorzugsweise aus Kunststoff. Diese geringe, jedoch genau reproduzierbare Reibung trägt entscheidend zu einer präzisen Nachstellung des Nachstellelementes bei. Verhindert wird, dass die im Betrieb der Fahrzeugbremse eintretenden Rüttelbewegungen die Elemente der Nachstelleinrichtung beeinflussen können.

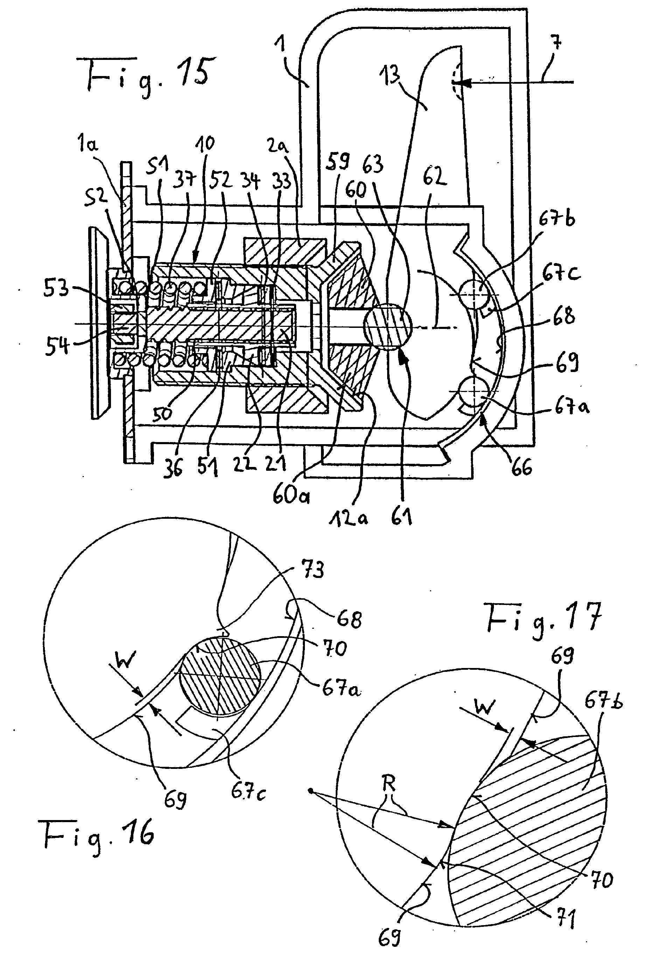

Eine weitere Ausführungsform ist in Figur 15 dargestellt. Diese ist sehr ähnlich der Ausführungsform nach Figur 2 bzw. nach Figuren 3a bis 3e aufgebaut, jedoch bietet sie konstruktive und herstellungstechnische Vorteile. Auf dem Gewindeelement 21, welches hier wiederum in seiner axialen Bewegung durch die Axialspalte S1 und S2 begrenzt ist, sitzt eine relativ lang gestaltete Hülse 50, welche auf diese Weise auch ein besonders lang gestaltetes Gegengewinde der Verschraubung mit großer Steigung aufnimmt. Mit der Hülse 50 starr verbunden ist dann das Gewindeelement 22. Die Hülse 50 des Gewindeelements 22 ermöglicht ein besonders reibungs- und verkantungsarmes Drehen des äußeren Gewindeelements 22 auf dem inneren Gewindeelement 21.

Anders als bei Figur 2 ist bei Figur 15 auch die Anordnung der Druckfläche 30 des äußeren Gewindeelements 22 und der Gegendruckfläche 31 des Nachstellelements 10. Die Gegendruckfläche 31 befindet sich auch hier nicht einstückig am Nachstellelement 10, sondern an einem ringförmigen, mit einer Stufe versehenen Einsatz 51. Der Einsatz 51 stützt sich axial an einer Stufe ab, mit der die Innenwandung des Nachstellelements 10 versehen ist. Der Einsatz 51 ist zudem ausreichend drehfest in dem Nachstellelement 10 angeordnet. Während der Einsatz 51 des Nachstellelements 10, der Bremsscheibe abgewandt, die Gegendruckfläche 31 aufweist, ist der Einsatz 51 der Bremsscheibe zugewandt mit einer Stirnfläche 52 versehen, an welcher sich das Axiallager 36 abstützt. Am Axiallager 36 wiederum stützt sich ein Winkelring 52 ab, welcher die Basis der Druckfeder 37 aufnimmt. Durch seine Gestalt als Winkelring mit einem daran angeformten zylindrischen Abschnitt vermag der Ring 52 die Druckfeder 37 zu zentrieren, so dass diese nicht verkanten oder verrutschen kann. Die Druckfeder 37 fixiert axial die Teile Einsatz 51, Axiallager 36 und Winkelring 52.

Zur konstruktiven Vereinfachung der Nachstellung trägt ferner bei, dass die Einstellung der wichtigen Axialspalte S1 und S2 mittels einer Mutter 53 erfolgt, die auf einen Gewindezapfen 54 am Ende des inneren Gewindeelements 21 aufgeschraubt und dort in entsprechender Lage drehfest gesichert ist. Die Unterseite der Mutter 53 stellt hierbei den zweiten Endanschlag 29 dar.

Gemäß Figur 15 ist das Nachstellelement 10 an seinem der Zuspanneinrichtung zugewandten Ende als Druckelement 59 mit einer daran ausgebildeten Gegendruckfläche 12a versehen. Die Gegendruckfläche 12a ist hier, bezogen auf die Mittellinie 62 der Nachstellung, konisch gestaltet. An der Gegendruckfläche 12a des Nachstellelements 10 liegt eine korrespondierend gestaltete Duckfläche 60a des Druckelements 60 an, welches seinerseits über das Gelenk 61 drehbeweglich mit dem Zuspannhebel 13 der Zuspanneinrichtung verbunden ist. Die Druckfläche 60a des Druckelements 60 ist hier konisch, und ebenso die konische Gegendruckfläche 12a des zweiten Druckelements 59.

Vor allem sind beide Druckflächen 60a, 12a koaxial zur Mittellinie 62 der Nachstelleinrichtung und bilden auf diese Weise ein axiales Gleit- und Drucklager. Dies hat den großen Vorteil, dass das am Nachstellelement 10 angeformte Druckelement 59 relativ zu dem Druckelement 60 um die Mittellinie 62 drehbar ist. Ferner können sich die Teile gegenseitig zentrieren, sobald Druckkräfte übertragen werden. Von ebenso großem Vorteil ist, dass sich die hier konisch gestalteten Flächen 12a, 60a beim Zurückziehen des Zuspannhebels 13 auch wieder sicher voneinander trennen, so dass nach einer solchen Trennung keine Reibung mehr von dem Druckelement 60 auf das hierzu drehbare Nachstellelement 10 ausgeübt wird. Dies ist von großem Wert vor allem im Rahmen der oben im einzelnen erläuterten Nachstellung, die eine möglichst reibungsarme Verdrehbarkeit des Nachstellelements 10 voraussetzt.

Das ein- oder mehrteilig gestaltete Gelenk 61 verbindet das Druckelement 60 auf Druck und vorzugsweise auch auf Zug mit dem Zuspannhebel 13. Es befindet sich auf der Mittellinie 62 der Nachstelleinrichtung, und seine Achse schneidet die Mittellinie 62 in einem Rechten Winkel. Das Gelenk 61 setzt sich unter anderem aus einem runden Gelenkkörper 63 sowie zwei Halbschalen zusammen. Die eine Halbschale befindet sich in jenem Körper, an dem die Druckfläche 60a ausgebildet ist, wohingegen die andere Halbschale an dem Zuspannhebel 13 ausgebildet ist.

In Verlängerung des Gelenks 61 ist der Zuspannhebel 13 über eine dort angeordnete Lagerung 66 gegen das Bremsgehäuse 1 abgestützt. Bei dem dargestellten Ausführungsbeispiel setzt sich die Lagerung 66 aus vorzugsweise zylindrischen Wälzkörpern 67a, 67b zusammen. Die Wälzkörper 67a, 67b, die in einem gemeinsamen Lagerkäfig geführt sein können, rollen bzw. wälzen zwischen einer ersten Wälzbahn 68 in Form einer kreisförmig gekrümmten Lagermulde des Bremsgehäuses 1, und einer zweiten Wälzbahn 69 an dem Zuspannhebel 13. Vorzugsweise sind die Oberflächen beider Wälzbahnen 68, 69 gehärtet, ebenso die zylindrischen Wälzkörper 67a, 67b. Der Weg der Wälzkörper ist durch einen Anschlag 67c begrenzt.

Die als Lagermulde gestaltete äußere Wälzbahn 68 weist die Krümmung eines Kreissegments auf. Die Kontur der Wälzbahn 69 des Zuspannhebels 13 ist hingegen als Evolvente gestaltet, wobei der Bezugsort dieser Evolvente auf der Mittelachse des Gelenks 61 liegt. Wird daher der Zuspannhebel 13 mittels z.B. eines Bremszylinders verschwenkt, so laufen die Wälzkörper 67a, 67b an der evolventenförmigen Kontur der Wälzbahn 69 ab, wodurch auf das Gelenk 61 eine Bewegung fast ausschließlich längs der Mittellinie 62 ausgeübt wird mit der Folge, dass die Bremse ohne Schwenkbewegung des Druckstempels 2 zustellt. Wegen der evolventenförmigen Kontur der Wälzbahn 69 wirkt die von dem Zuspannhebel 13 erzeugte Zustellkraft in dem Gelenk 61 bei jedem Schwenkwinkel axial.

Von besonderem Vorteil ist die nachfolgend anhand der Figuren 16 und 17 erläuterte Detailgestaltung der Wälzbahnen, auf denen die Wälzkörper 67a, 67b abwälzen. Die Figur 16 zeigt hierzu als Ausschnitt aus Fig. 15 die an dem Zuspannhebel 13 ausgebildete evolventenförmige Wälzbahn 69 mit dem Wälzkörper 67a, und Figur 17 zeigt einen nochmals vergrößerten Ausschnitt aus Figur 15 für den anderen Wälzkörper 67b. Beide Darstellungen zeigen zudem die Wälzkörper 67a, 67b und die Wälzbahn 69 bei nicht verschwenktem Zuspannhebel 13 und damit in jener Situation, in welcher der Zuspannhebel 13 seine unbetätigte, d.h. druckkraftfreie Neutralstellung einnimmt. Es findet also keine Zuspannung der Bremse statt.

Mindestens eine der beiden Wälzbahnen, beim Ausführungsbeispiel ist dies die innere Wälzbahn 69, ist mit einer Einsenkung oder Vertiefung 70 nach Art einer Mulde versehen. Gegenüber dem übrigen Niveau der Wälzbahn ist die Vertiefung um den in den Figuren 16 und 17 dargestellten Betrag W abgesenkt. Der Übergang von der muldenartigen Vertiefung 70 zu der normalen Kontur der Wälzbahn, an dem die Wälzkörper 67a, 67b während der Zustellung entlang wandern, ist als Rundung 71 gestaltet. Die Rundung 71 kann z.B. einen Rundungsradius R aufweisen.

Figur 16 lässt für einen der beiden Wälzkörper erkennen, dass die Endposition dieses Wälzkörpers 67a, die dieser im Fall der Nicht-Zustellung einnimmt, durch einen Begrenzungsnocken 73 definiert wird, welcher die Vertiefung 70 an ihrem anderen, der Rundung 71 abgewandten Ende begrenzt, und welcher deutlich über die normale Kontur der Wälzbahn 69 vorsteht. Der Begrenzungsnocken 73 bildet auf diese Weise einen definierten Endanschlag für den betreffenden Wälzkörper 67a.

Bei Zustellung der Bremse führt die Schwenkbewegung des Zuspannhebels 13 dazu, dass sich der Wälzkörper 67a ebenso wie der andere Wälzkörper 67b zunächst aus seiner Vertiefung 70 herauswälzt. Dies führt wegen der Tiefe W der Vertiefung 70 zu einer sofortigen Zustellung. Mit anderen Worten: bereits eine geringe Anfangsauslenkung des Zuspannhebels 13 bei A führt zu einer relativ großen ersten Zustellung. Haben die Wälzkörper 67a, 67b ihre jeweilige Vertiefung 70 dann verlassen, erfolgt die weitere Übertragung der Verschwenkung des Zuspannhebels 13 in eine Zustellbewegung der Scheibenbremse entsprechend der evolventenförmigen Kontur der inneren Wälzbahn 69.

Die relativ große Anfangszustellung infolge der Vertiefungen 70 in der Kontur der Wälzbahn bietet große praktische Vorteile. Denn zu Beginn der Zustellung sind noch keine Bremskräfte zu überwinden, vielmehr ist in diesem Stadium nur die innere Reibung der beteiligten Komponenten, die Rückstellkraft der Druckfeder 37, sowie ggf. die Nachstellung kräftemäßig zu überwinden. Es ist daher von Vorteil, für diesen ersten Zustellweg zum Überwinden des Lüftspiels L mit großem Reaktionsweg bei relativ kleiner Schwenkbewegung des Zuspannhebels 13 zu arbeiten. Dies wird durch die genannte Modifikation der beteiligten Konturen der Wälzbahnen erreicht. Zudem haben die heute für die Bremszustellung verwendeten pneumatischen Bremszylinder eine degressive Arbeitscharakteristik bei Erreichen ihres maximalen Kolbenhubs, der durch die aufgezeigten Maßnahmen gar nicht erst erreicht wird. Der ausgenutzte Arbeitsbereich des Kolbenhubs wird daher vorteilhaft mehr in Richtung der Grundstellung des Kolbens verschoben.

### Bezugszeichenliste:

- 1: Bremsgehäuse
- 1 a: Deckel
- 1b: Prägung im Deckel
- 2: Druckstempel
- 2a: Joch
- 3: Belagplatte
- 4: Bremsbelag
- 5: Reibbelag
- 6: Bremsscheibe
- 7: Betätigungsstange des Bremszylinders
- 10: Nachstellelement
- 11: Schraubverbindung
- 12: Druckfläche
- 12a: Gegendruckfläche
- 13: Zuspannhebel
- 21: Gewindeelement (Gewindemutter)
- 21 a: Gewindeelement
- 21 b: Gewindeelement
- 22: Gewindeelement (Gewindespindel)
- 23: Verschraubung
- 24: Zylindrischer Abschnitt
- 25: Bohrung
- 27: Vierkant
- 28: 1. Endanschlag
- 29: 2. Endanschlag
- 30: Druckfläche
- 31: Gegendruckfläche
- 33: Druckfeder
- 34: Axiallager
- 35: Axiallager
- 36: Axiallager
- 37: Druckfeder
- 38: Rutschkupplung
- 39: Druckkupplung
- 40a: Nut
- 40b: Nut
- 41: Sprengring
- 41 b: Nut
- 42: Stift
- 43: Druckfeder
- 50: Hülse
- 51: Einsatz
- 52: Winkelring
- 53: Mutter
- 54: Gewindezapfen
- 59: Druckelement
- 60: Druckelement
- 60a: Druckfläche
- 61: Gelenk
- 62: Mittellinie
- 63: Gelenkkörper
- 66: Wälzlagerung
- 67a: Wälzkörper
- 67b: Wälzkörper
- 67c: Anschlag
- 68: Wälzbahn
- 69: Wälzbahn
- 70: Vertiefung
- 71: Rundung
- 73: Begrenzungsnocken
- 110: Nachstellelement
- 111: Schraubverbindung
- 112: Druckfläche
- 113: Gehäuse
- 121: Gewindeelement
- 121 a: Gewindeabschnitt
- 122: Gewindeelement
- 122a: Gewindeabschnitt
- 122b: seitliche Erweiterung
- 123: Verschraubung
- 124: zylindrischer Abschnitt
- 125: Hülse, Außenhülse
- 126: Hülse, Innenhülse
- 127: Mehrkantführung
- 128: Bremssattelteil
- 129: Verzahnung
- 130: Kugelkörper
- 130a: Kugelkäfig
- 131: Axiallager
- 132: Ausnehmung
- 133: Gleitlager
- 134: Zentrieransatz
- 137: Druckfeder
- 138: Einwegkupplung
- 139: Drehmomentkupplung
- 140: Zahnrad
- 141: Verzahnung
- 142: Eingriffsmittel
- 150: Endanschlag, Gewindeflanke
- 151: Endanschlag, Gewindeflanke
- 160: Kugelzapfen
- 161: Kugelpfanne
- 164: Gehäuse der Einwegkupplung
- 165: Sperrkörper
- 166: Wälzkörper
- 167: Reibring
- 168: Sicherungsring

- A: freies Hebelende
- B: Bereich
- D: Drehachse
- F: Zuspannkraft
- L: Lüftspiel
- R: Rundungsradius
- S1: 1. Axialspalt
- S2: 2. Axialspalt
- S3: Axialspalt, Gewindespiel
- V: Verschleiß
- W: Absenkung

## Patentansprüche

1. Radbremse mit integrierter Nachstelleinrichtung, mit einem in einem Bremsgehäuse (1) geführten und gegen einen Bremsbelag (4) arbeiteten Druckstempel (2), einer Zuspanneinrichtung zum Betätigen des Druckstempels (2), und einem im Kraftfluß zwischen Zuspanneinrichtung und Druckstempel (2) innerhalb des Bremsgehäuses angeordneten Nachstellelement (10; 110), das in Schraubverbindung (11; 111) mit dem Druckstempel (2) steht,
**gekennzeichnet durch**
ein Gewindeelement (21; 121), welches ab dem Überwinden eines vorgegebenen Zustellweges den anschließenden Zustellweg zumindest teilweise in einer Verdrehung aufnimmt und zugleich oder bei der Rückstellung auf das Nachstellelement (10; 110) überträgt, welches **dadurch** gegenüber dem Druckstempel (2) verdreht wird und über die Schraubverbindung (11; 111) den Druckstempel (2) relativ zu dem Nachstellelement (10; 110) verstellt.

2. Radbremse nach Anspruch 1,
**dadurch gekennzeichnet,**
**dass** das Gewindeelement (21) über eine selbstschließende Kupplung (30,31,33) mit dem Nachstellelement (10) drehfest in Verbindung steht.

3. Radbremse nach Anspruch 2,
**dadurch gekennzeichnet,**
**dass** die Kupplung nach dem Überwinden des vorgegebenen Zustellweges öffnet.

4. Radbremse nach einem der vorangehenden Ansprüche,
**dadurch gekennzeichnet,**
**dass** das Gewindeelement (21) die Verdrehung ab dem Öffnen der selbstschließenden Kupplung (30,31,33) gegenüber einem weiteren Gewindeelement (22) erfährt.

5. Radbremse nach einem der vorangehenden Ansprüche,
**dadurch gekennzeichnet,**
**dass** der Zustellweg bis zum Öffnen der selbstschließenden Kupplung (30, 31, 33) durch das Gewindeelement (22) vorgegeben wird, welches hierfür zwischen zwei Endanschlägen (28, 29) entsprechend beweglich ist.

6. Radbremse nach einem der vorangehenden Ansprüche,
**dadurch gekennzeichnet,**
**dass** die selbstschließende Kupplung (30, 31, 33) die axiale Zustellbewegung des Nachstellelements (10) auf das Gewindeelement (21) und dieses wiederum auf das Gewindeelement (22) überträgt, bis der Endanschlag (28) erreicht ist.

7. Radbremse nach einem der vorangehenden Ansprüche,
**dadurch gekennzeichnet,**
**dass** die Aufnahme der Verdrehung des Gewindeelements (21) beim Zustellen ab dem Erreichen des ersten Endanschlages (28) des Gewindeelements (22), und dass die Abgabe der Verdrehung bei der Rückstellung ab dem Erreichen des zweiten Endanschlages (29) des Gewindeelements (22) erfolgt.

8. Radbremse nach einem der vorangehenden Ansprüche,
**dadurch gekennzeichnet,**
**dass** das Gewindeelement (21; 121) gegenüber einem weiteren Gewindeelement (22; 122) verschraubbar ist, welches zwischen einem ersten (28; 150) und einem zweiten (29; 151) Anschlag beweglich angeordnet ist.

9. Radbremse nach einem der vorangehenden Ansprüche,
**gekennzeichnet durch**
eine federbelastete Kupplung (30, 31; 139) zwischen dem Gewindeelement (21; 121) und dem Nachstellelement (10; 110).

10. Radbremse mit integrierter Nachstelleinrichtung, mit einem in einem Bremsgehäuse (1) geführten und gegen einen Bremsbelag (4) arbeiteten Druckstempel (2), einer Zuspanneinrichtung zum Betätigen des Druckstempels (2), und einem im Kraftfluß zwischen Zuspanneinrichtung und Druckstempel (2) innerhalb des Bremsgehäuses angeordneten Nachstellelement (10; 110), das in Schraubverbindung (11; 111) mit dem Druckstempel (2) steht,
**gekennzeichnet durch**
ein Gewindeelement (21; 121), ein mit dem Gewindeelement (21; 121) verschraubtes weiteres Gewindeelement (22, 22b; 122), das zwischen einem ersten (28; 150) und einem zweiten (29; 151) Anschlag beweglich ist, und
eine federbelastete Kupplung (30, 31; 139) zwischen dem Gewindeelement (21; 121) und dem Nachstellelement (10; 110).

11. Radbremse nach einem der vorangehenden Ansprüche,
**dadurch gekennzeichnet,**
**daß** die Verschraubung (23; 123) zwischen den beiden Gewindeelementen (21, 22, 22b; 121, 122) eine größere Gewindesteigung als die Schraubverbindung (11; 111) des Nachstellelements (10; 110) aufweist.

12. Radbremse nach einem der vorangehenden Ansprüche, **dadurch gekennzeichnet, dass** das Gewindeelement (21; 121) gegenüber dem Bremsgehäuse (1) drehbar aber nicht axial beweglich angeordnet ist.

13. Radbremse nach Anspruch 12,
**dadurch gekennzeichnet,**
**daß** das weitere Gewindeelement (22, 22b; 122) axial beweglich aber verdrehsicher in dem Bremsgehäuse (1) angeordnet ist.

14. Radbremse nach der vorangehenden Ansprüche,
**dadurch gekennzeichnet ,**
**daß** zur Erzeugung der Federkraft eine Feder (33) das Gewindeelement (21) in Richtung auf den Bremsbelag (4) beaufschlagt, und daß sich das eine Ende der Feder (33) gegen das Gewindeelement (21) oder das Nachstellelement (10), und das andere Ende der Feder (33) gegen ein freilaufendes Axiallager (34) abstützt.

15. Radbremse nach einem der vorangehenden Ansprüche,
**gekennzeichnet durch**
eine das Nachstellelement (10; 110) in der dem Bremsbelag (4) abgewandten Richtung beaufschlagende Feder (37; 137).

16. Radbremse nach einem der vorangehenden Ansprüche,
**dadurch gekennzeichnet,**
**daß** sich die zweite Feder (37; 137) mit ihrem einen Ende gegen das Bremsgehäuse (1), und mit ihrem anderen Ende gegen ein Axiallager (36; 131) abstützt.

17. Radbremse nach einem der vorangehenden Ansprüche,
**dadurch gekennzeichnet,**
**daß** das Gewindeelement (21; 121) und das weitere Gewindeelement (22, 22b; 122) konzentrisch zueinander angeordnet sind.

18. Radbremse nach einem der vorangehenden Ansprüche,
**dadurch gekennzeichnet,**
**daß** ein Gewindeelement eine mit einer Druckfläche versehene Gewindemutter, und das weitere Gewindeelement ein Gewindebolzen ist.

19. Radbremse nach einem der vorangehenden Ansprüche,
**dadurch gekennzeichnet,**
**daß** das Gewindeelement (21; 121) in einer Einsenkung oder Kammer des Nachstellelementes (10; 110) sitzt, an bzw. in der eines der beiden Elemente (30, 31; 132) der Kupplung ausgebildet ist.

20. Radbremse nach einem der vorangehenden Ansprüche,
**dadurch gekennzeichnet,**
**daß** das Nachstellelement (10; 110) konzentrisch zu den beiden Gewindeelementen (21, 22, 22b; 121, 122) angeordnet ist.

21. Radbremse nach einem der vorangehenden Ansprüche,
**dadurch gekennzeichnet,**
**daß** das Nachstellelement (10; 110) topfförmig gestaltet, und für die Schraubverbindung (11; 111) mit dem Druckstempel (2) mit einem Außengewinde versehen ist.

22. Radbremse nach einem der Ansprüche 10 bis 21,
**dadurch gekennzeichnet,**
**daß** die Kupplung (30, 31) eine Reibkupplung ist.

23. Radbremse nach einem der vorangehenden Ansprüche,
**dadurch gekennzeichnet,**
**daß** der Druckstempel (2) ein Doppelstempel ist, dessen beiden Einzelstempel über ein Joch (2a) starr miteinander verbunden sind, in dessen Mitte sich die Schraubverbindung (11; 111) mit dem Nachstellelement (10; 110) befindet.

24. Radbremse nach einem der Ansprüche 10 bis 23, **dadurch gekennzeichnet, dass** der erste (150) und zweite Anschlag (151) von benachbarten Gewindeflanken des Gewindeelements (21; 121) gebildet wird.

25. Radbremse nach einem der Ansprüche 4 bis 24, **dadurch gekennzeichnet, dass** die Gewindeelemente (121, 122) über eine Verschraubung (123) miteinander verbunden sind, die ein Gewindespiel (S3) aufweist.

26. Radbremse nach einem der Ansprüche 24 und/oder 25, **dadurch gekennzeichnet, dass** die axiale Größe des Gewindespiels (S3) das Lüftspiel (L) bestimmt.

27. Radbremse nach einem der vorangehenden Ansprüche, **dadurch gekennzeichnet, dass** das Gewindeelement (21; 121) über eine federbelastete Drehmomentkupplung (30, 31; 139) mit dem Nachstellelement (10; 110) gekoppelt ist.

28. Radbremse nach Anspruch 27, **dadurch gekennzeichnet, dass** die Drehmomentkupplung (30, 31; 139) konzentrisch zu dem Gewindeelement (21; 121) angeordnet ist.

29. Radbremse nach Anspruch 28, **dadurch gekennzeichnet, dass** die Drehmomentkupplung (139) von einer federbelasteten Hülse (125) und mindestens einem Kugelkörper (130) gebildet wird.

30. Radbremse nach einem der vorangehenden Ansprüche, **dadurch gekennzeichnet, dass** das Gewindeelement (121) über eine Einwegkupplung (138) mit dem Nachstellelement (110) gekoppelt ist.

31. Radbremse nach Anspruch 30, **dadurch gekennzeichnet, dass** das Gewindeelement (121) über die Einwegkupplung (138) mit einer inneren Hülse (126) gekoppelt ist.

32. Radbremse nach Anspruch 31, **dadurch gekennzeichnet, dass** die innere Hülse (126) über eine Mehrkantführung (127) axial beweglich aber drehfest mit einer äußeren Hülse (125) verbunden ist.

33. Radbremse nach einem der vorangehenden Ansprüche, **dadurch gekennzeichnet, dass** das Nachstellelement (110) mit einer Verzahnung (129) versehen ist.

34. Radbremse nach Anspruch 33, **dadurch gekennzeichnet, dass** die Verzahnung (129) mit der Verzahnung (141) eines neben dem Nachstellelement (110) angeordneten Zahnrades (140) kämmt.

35. Radbremse nach Anspruch 34, **dadurch gekennzeichnet, dass** das Zahnrad (140) mit Eingriffsmitteln (142) zur Rückstellung des Nachstellelementes (110) versehen ist.

36. Radbremse nach Anspruch 34, **dadurch gekennzeichnet, dass** das Zahnrad (140) an einer seitlichen Erweiterung (122b) des Gewindeelements (122) drehbar gelagert ist.

37. Radbremse nach einem der vorangehenden Ansprüche, **dadurch gekennzeichnet, dass** das erste Gewindeelement (121) in mindestens einem Reibungselement (161, 167) gelagert ist.

38. Radbremse nach einem der vorangehenden Ansprüche, **dadurch gekennzeichnet, dass** das erste Gewindeelement (121) an einem seiner beiden Enden einen Kugelzapfen (160) aufweist, der in einer Kugelpfanne (161) gelagert ist.

39. Radbremse nach einem der vorangehenden Ansprüche, **gekennzeichnet durch** einen verschwenkbaren Zuspannhebel (13) der Zuspanneinrichtung, der sich einerseits gegenüber dem Bremsgehäuse (1), und andererseits in Richtung zum Druckstempel (2) abstützt, und eine im Kraftfluß zwischen Zuspannhebel (13) und Druckstempel (2) angeordnete Druckübertragungseinrichtung, bestehend aus einem drehbeweglich zu dem Zuspannhebel (13) ausgebildeten und eine Druckfläche (60a) aufweisenden ersten Druckelement (60), sowie einem zu dem ersten Druckelement (60) drehbaren und eine Gegendruckfläche (12a) aufweisenden zweiten Druckelement (59).

## Claims

1. Wheel brake with an integrated adjusting device, comprising a pressure piston (2) which is guided in a brake housing (1) and operates against a brake lining (4), a brake application device for actuating the pressure piston (2), and an adjusting element (10; 110) which is arranged within the brake housing in the force flux between the brake application device and the pressure piston (2) and which is in screw connection (11; 111) with the pressure piston (2), **characterised by** a threaded element (21; 121) which, once a predefined brake application travel has been overcome, absorbs the subsequent brake application travel at least partially in a rotation and at the same time or during the return movement transmits it to the adjusting element (10; 110) which is thereby rotated relative to the pressure piston (2) and, via the screw connection (11; 111), moves the pressure piston (2) relative to the adjusting element (10; 110).

2. Wheel brake according to claim 1, **characterised in that** the threaded element (21) is non-rotatably connected to the adjusting element (10) via a self-closing clutch (30, 31, 33).

3. Wheel brake according to claim 2, **characterised in that** the clutch opens once the predefined brake application travel has been overcome.

4. Wheel brake according to one of the preceding claims, **characterised in that** the threaded element (21) is rotated relative to a further threaded element (22) once the self-closing clutch (30, 31, 33) has been opened.

5. Wheel brake according to one of the preceding claims, **characterised in that** the brake application travel up to the point of opening of the self-closing clutch (30, 31, 33) is predefined by the threaded element (22), which to this end can accordingly move between two end stops (28, 29).

6. Wheel brake according to one of the preceding claims, **characterised in that** the self-closing clutch (30, 31, 33) transmits the axial brake application movement of the adjusting element (10) to the threaded element (21) and the latter in turn transmits it to the threaded element (22), until the end stop (28) is reached.

7. Wheel brake according to one of the preceding claims, **characterised in that** the absorption of the rotation of the threaded element (21) during brake application starts from the time the first end stop (28) of the threaded element (22) is reached, and **in that** the release of the rotation during the return movement starts from the time the second end stop (29) of the threaded element (22) is reached.

8. Wheel brake according to one of the preceding claims, **characterised in that** the threaded element (21; 121) can be screwed relative to a further threaded element (22; 122) which is arranged such that it can move between a first stop (28; 150) and a second stop (29; 151).

9. Wheel brake according to one of the preceding claims, **characterised by** a spring-loaded clutch (30, 31; 139) between the threaded element (21; 121) and the adjusting element (10; 110).

10. Wheel brake with an integrated adjusting device, comprising a pressure piston (2) which is guided in a brake housing (1) and operates against a brake lining (4), a brake application device for actuating the pressure piston (2), and an adjusting element (10; 110) which is arranged within the brake housing in the force flux between the brake application device and the pressure piston (2) and which is in screw connection (11; 111) with the pressure piston (2), **characterised by** a threaded element (21; 121), a further threaded element (22, 22b; 122) which is screwed to the threaded element (21; 121) and which can move between a first stop (28; 150) and a second stop (29; 151), and a spring-loaded clutch (30, 31; 139) between the threaded element (21; 121) and the adjusting element (10; 110).

11. Wheel brake according to one of the preceding claims, **characterised in that** the screw connection (23; 123) between the two threaded elements (21, 22, 22b; 121, 122) has a greater thread pitch than the screw connection (11; 111) of the adjusting element (10; 110).

12. Wheel brake according to one of the preceding claims, **characterised in that** the threaded element (21; 121) is arranged such that it cannot move axially but can rotate relative to the brake housing (1).

13. Wheel brake according to claim 12, **characterised in that** the further threaded element (22, 22b; 122) is arranged such that it can move axially but cannot rotate in the brake housing (1).

14. Wheel brake according to one of the preceding claims, **characterised in that,** in order to generate the spring force, a spring (33) acts upon the threaded element (21) in the direction towards the brake lining (4), and **in that** one end of the spring (33) is supported against the threaded element (21) or the adjusting element (10) and the other end of the spring (33) is supported against a free-running axial bearing (34).

15. Wheel brake according to one of the preceding claims, **characterised by** a spring (37; 137) which acts upon the adjusting element (10; 110) in the direction facing away from the brake lining (4).

16. Wheel brake according to one of the preceding claims, **characterised in that** the second spring (37; 137) is supported with one end against the brake housing (1) and with its other end against an axial bearing (36; 131).

17. Wheel brake according to one of the preceding claims, **characterised in that** the threaded element (21; 121) and the further threaded element (22, 22b; 122) are arranged concentrically with respect to one another.

18. Wheel brake according to one of the preceding claims, **characterised in that** one threaded element is a threaded nut provided with a pressure surface, and the further threaded element is a threaded bolt.

19. Wheel brake according to one of the preceding claims, **characterised in that** the threaded element (21; 121) is seated in a depression or chamber of the adjusting element (10; 110), on or in which one of the two elements (30, 31; 132) of the clutch is formed.

20. Wheel brake according to one of the preceding claims, **characterised in that** the adjusting element (10; 110) is arranged concentrically with respect to the two threaded elements (21, 22, 22b; 121, 122).

21. Wheel brake according to one of the preceding claims, **characterised in that** the adjusting element (10; 110) is configured in the shape of a pot, and is provided with an outer thread for the screw connection (11; 111) to the pressure piston (2).

22. Wheel brake according to one of claims 10 to 21, **characterised in that** the clutch (30, 31) is a friction clutch.

23. Wheel brake according to one of the preceding claims, **characterised in that** the pressure piston (2) is a double piston, the two individual pistons of which are rigidly connected to one another via a yoke (2a), in the centre of which the screw connection (11; 111) to the adjusting element (10; 110) is located.

24. Wheel brake according to one of claims 10 to 23, **characterised in that** the first stop (150) and the second stop (151) are formed by adjacent thread flanks of the threaded element (21; 121).

25. Wheel brake according to one of claims 4 to 24, **characterised in that** the threaded elements (121, 122) are connected to one another via a screw connection (123) which has a thread clearance (S3).

26. Wheel brake according to one of claims 24 and/or 25, **characterised in that** the axial size of the thread clearance (S3) determines the air gap (L).

27. Wheel brake according to one of the preceding claims, **characterised in that** the threaded element (21; 121) is coupled to the adjusting element (10; 110) via a spring-loaded torque clutch (30, 31; 139).

28. Wheel brake according to claim 27, **characterised in that** the torque clutch (30, 31; 139) is arranged concentrically with respect to the threaded element (21; 121).

29. Wheel brake according to claim 28, **characterised in that** the torque clutch (139) is formed by a spring-loaded sleeve (125) and at least one spherical body (130).

30. Wheel brake according to one of the preceding claims, **characterised in that** the threaded element (121) is coupled to the adjusting element (110) via a one-way clutch (138).

31. Wheel brake according to claim 30, **characterised in that** the threaded element (121) is coupled to an inner sleeve (126) via the one-way clutch (138).

32. Wheel brake according to claim 31, **characterised in that** the inner sleeve (126) is connected to an outer sleeve (125) in an axially movable but non-rotatable manner via a polygonal guide (127).

33. Wheel brake according to one of the preceding claims, **characterised in that** the adjusting element (110) is provided with a toothing (129).

34. Wheel brake according to claim 33, **characterised in that** the toothing (129) meshes with the toothing (141) of a toothed wheel (140) arranged next to the adjusting element (110).

35. Wheel brake according to claim 34, **characterised in that** the toothed wheel (140) is provided with engagement means (142) for the return movement of the adjusting element (110).

36. Wheel brake according to claim 34, **characterised in that** the toothed wheel (140) is rotatably mounted on a lateral extension (122b) of the threaded element (122).

37. Wheel brake according to one of the preceding claims, **characterised in that** the first threaded element (121) is mounted in at least one friction element (161, 167).

38. Wheel brake according to one of the preceding claims, **characterised in that** the first threaded element (121) has at one of its two ends a ball stud (160) which is mounted in a ball cup (161).

39. Wheel brake according to one of the preceding claims, **characterised by** a pivotable brake application lever (13) of the brake application device, which is supported on the one hand against the brake housing (1) and on the other hand in the direction towards the pressure piston (2), and a pressure transmission device which is arranged in the force flux between the brake application lever (13) and the pressure piston (2), said pressure transmission device consisting of a first pressure element (60) formed such that it can rotate relative to the brake application lever (13) and having a pressure surface (60a), and a second pressure element (59) which can rotate relative to the first pressure element (60) and has a counterpressure surface (12a).

## Revendications

1. Frein sur roue avec un dispositif de rattrapage de jeu intégré, un vérin presseur (2) guidé dans un carter de frein (1) et travaillant contre une garniture de frein (4), un dispositif d'application pour l'actionnement du vérin presseur (2), et un élément de rattrapage de jeu (10 ; 110) disposé dans le flux de forces entre le dispositif d'application et le vérin presseur (2) dans le carter de frein, lequel est en liaison vissée (11 ; 111) avec le vérin presseur (2),
**caractérisé par** un élément fileté (21 ; 121) qui reçoit au moins partiellement en une torsion à partir du surpassement d'une course d'application du frein prescrite, la course d'application du frein suivante et la transmet en même temps ou lors du rappel à l'élément de rattrapage de jeu (10 ; 110) qui est pivoté par là-même par rapport au vérin presseur (2) et règle par la liaison vissée (11 ; 111) le vérin presseur (2) par rapport à l'élément de rattrapage de jeu (10 ; 110).

2. Frein sur roue selon la revendication 1, **caractérisé en ce que** l'élément fileté (21) est couplé en rotation avec l'élément de rattrapage de jeu (10) par un accouplement (30, 31, 33) à fermeture automatique.

3. Frein sur roue selon la revendication 2, **caractérisé en ce que** l'accouplement ouvre après le surpassement de la course d'application du frein prescrite.

4. Frein sur roue selon l'une quelconque des revendications précédentes, **caractérisé en ce que** l'élément fileté (21) subit la rotation dès l'ouverture de l'accouplement (30, 31, 33) à fermeture automatique par rapport à un autre élément fileté (22).

5. Frein sur roue selon l'une quelconque des revendications précédentes, **caractérisé en ce que** la course d'application du frein est prescrite jusqu'à l'ouverture de l'accouplement (30, 31, 33) à fermeture automatique par l'élément fileté (22) qui est mobile en conséquence à cet effet entre deux butées de fin de course (28, 29).

6. Frein sur roue selon l'une quelconque des revendications précédentes, **caractérisé en ce que** l'accouplement (30, 31, 33) à fermeture automatique transmet le mouvement d'approche axial de l'élément de rattrapage de jeu (10) à l'élément fileté (21) et le transmet de nouveau à l'élément fileté (22) jusqu'à ce que la butée de fin de course (28) soit atteinte.

7. Frein sur roue selon l'une quelconque des revendications précédentes, **caractérisé en ce que** la torsion de l'élément fileté (21) est incluse lors de l'approche, une fois la première butée de fin de course (28) de l'élément fileté (22) atteinte, et **en ce que** la torsion est éliminée lors du rappel une fois la seconde butée de fin de course (29) de l'élément fileté (22) atteinte.

8. Frein sur roue selon l'une quelconque des revendications précédentes, **caractérisé en ce que** l'élément fileté (21 ; 121) peut être vissé par rapport à un autre élément fileté (22 ; 122) qui est disposé de manière mobile entre une première butée (28 ; 150) et une seconde butée (29 ; 151).

9. Frein sur roue selon l'une quelconque des revendications précédentes, **caractérisé par** un accouplement (30, 31 ; 139) sollicité par ressort entre l'élément fileté (21 ; 121) et l'élément de rattrapage de jeu (10 ; 110).

10. Frein sur roue avec dispositif de rattrapage de jeu intégré, un vérin presseur (2) guidé dans un carter de frein (1) et travaillant contre une garniture de frein (4), un dispositif d'application pour l'actionnement du vérin presseur (2), et un élément de rattrapage de jeu (10 ; 110) disposé dans le flux de forces entre le dispositif d'application et le vérin presseur (2) dans le carter de frein qui est en liaison vissée (11 ; 111) avec le vérin presseur (2),
**caractérisé par** un élément fileté (21 ; 121), un autre élément fileté (22, 22b ; 122) vissé à l'élément fileté (21 ; 121) qui est mobile entre une première butée (28 ; 150) et une seconde butée (29 ; 151), et un accouplement (30, 31 ; 139) sollicité par ressort entre l'élément fileté (21 ; 121) et l'élément de rattrapage de jeu (10 ; 110).

11. Frein sur roue selon l'une quelconque des revendications précédentes, **caractérisé en ce que** le vissage (23 ; 123) entre les deux éléments filetés (21, 22, 22b ; 121, 122) présente un pas plus grand que la liaison vissée (11 ; 111) de l'élément de rattrapage de jeu (10 ; 110).

12. Frein sur roue selon l'une quelconque des revendications précédentes, **caractérisé en ce que** l'élément fileté (21 ; 121) est monté pivotant par rapport au carter de frein (1) mais pas de manière mobile axialement.

13. Frein sur roue selon la revendication 12, **caractérisé en ce que** l'autre élément fileté (22, 22b ; 122) est disposé de manière mobile axialement mais sans possibilité de rotation dans le carter de frein (1).

14. Frein sur roue selon les revendications précédentes, **caractérisé en ce que** pour générer la force de ressort, un ressort (33) sollicite l'élément fileté (21) en direction de la garniture de frein (4), et **en ce qu'**une extrémité du ressort (33) s'appuie contre l'élément fileté (21) ou l'élément de rattrapage de jeu (10) et l'autre extrémité du ressort (33) contre un palier à charge axiale (34) à course libre.

15. Frein sur roue selon l'une quelconque des revendications précédentes, **caractérisé par** un ressort (37 ; 137) sollicitant l'élément de rattrapage de jeu (10 ; 110) dans la direction opposée à la garniture de frein (4).

16. Frein sur roue selon l'une quelconque des revendications précédentes, **caractérisé en ce que** le second ressort (37 ; 137) s'appuie avec une extrémité contre le carter de frein (1), et avec son autre extrémité contre un palier à charge axiale (36 ; 131).

17. Frein sur roue selon l'une quelconque des revendications précédentes, **caractérisé en ce que** l'élément fileté (21 ; 121) et l'autre élément fileté (22, 22b ; 122) sont disposés de manière concentrique l'un par rapport à l'autre.

18. Frein sur roue selon l'une quelconque des revendications précédentes, **caractérisé en ce qu'**un élément fileté est un écrou fileté pourvu d'une surface de pression, et l'autre élément fileté est un boulon fileté.

19. Frein sur roue selon l'une quelconque des revendications précédentes, **caractérisé en ce que** l'élément fileté (21 ; 121) siège dans un renfoncement ou une chambre de l'élément de rattrapage de jeu (10 ; 110), sur lequel ou dans laquelle l'un des deux éléments (30, 31 ; 132) de l'accouplement est réalisé.

20. Frein sur roue selon l'une quelconque des revendications précédentes, **caractérisé en ce que** l'élément de rattrapage de jeu (10 ; 110) est disposé de manière concentrique par rapport aux deux éléments filetés (21, 22, 22b ; 121, 122).

21. Frein sur roue selon l'une quelconque des revendications précédentes, **caractérisé en ce que** l'élément de rattrapage de jeu (10 ; 110) est formé comme un pot, et est pourvu pour la liaison vissée (11 ; 111) avec le vérin presseur (2) d'un filetage extérieur.

22. Frein sur roue selon l'une quelconque des revendications 10 à 21, **caractérisé en ce que** l'accouplement (30, 31) est un accouplement à friction.

23. Frein sur roue selon l'une quelconque des revendications précédentes, **caractérisé en ce que** le vérin presseur (2) est un double vérin, dont les deux vérins individuels sont rigidement reliés l'un à l'autre par un cadre (2a), au milieu duquel se trouve la liaison vissée (11 ; 111) avec l'élément de rattrapage de jeu (10 ; 110).

24. Frein sur roue selon l'une quelconque des revendications 10 à 23, **caractérisé en ce que** la première butée (150) et la seconde butée (151) sont formées par des flancs de filets contigus de l'élément fileté (21 ; 121).

25. Frein sur roue selon l'une quelconque des revendications 4 à 24, **caractérisé en ce que** les éléments filetés (121, 122) sont reliés l'un à l'autre par un vissage (123) qui présente un jeu de filetage (S3).

26. Frein sur roue selon l'une quelconque des revendications 24 et/ou 25, **caractérisé en ce que** la dimension axiale du jeu de filetage (S3) détermine le jeu d'aération (L).

27. Frein sur roue selon l'une quelconque des revendications précédentes, **caractérisé en ce que** l'élément fileté (21 ; 121) est couplé par un accouplement de couple (30, 31 ; 139) sollicité par ressort à l'élément de rattrapage de jeu (10 ; 110).

28. Frein sur roue selon la revendication 27, **caractérisé en ce que** l'accouplement de couple (30, 31 ; 139) est disposé de manière concentrique par rapport à l'élément fileté (21 ; 121).

29. Frein sur roue selon la revendication 28, **caractérisé en ce que** l'accouplement de couple (139) est formé par une douille sollicitée par ressort (125) et au moins un corps sphérique (130).

30. Frein sur roue selon l'une quelconque des revendications précédentes, **caractérisé en ce que** l'élément fileté (121) est couplé par un accouplement à une voie (138) à l'élément de rattrapage de jeu (110).

31. Frein sur roue selon la revendication 30, **caractérisé en ce que** l'élément fileté (121) est couplé par l'accouplement à une voie (138) à une douille (126) intérieure.

32. Frein sur roue selon la revendication 31, **caractérisé en ce que** la douille (126) intérieure est reliée de manière mobile axialement par un guidage polygonal (127) mais de manière bloquée en rotation à une douille (125) extérieure.

33. Frein sur roue selon l'une quelconque des revendications précédentes, **caractérisé en ce que** l'élément de rattrapage de jeu (110) est pourvu d'une denture (129).

34. Frein sur roue selon la revendication 33, **caractérisé en ce que** la denture (129) s'engrène avec la denture (141) d'une roue dentée (140) disposée à côté de l'élément de rattrapage de jeu (110).

35. Frein sur roue selon la revendication 34, **caractérisé en ce que** la roue dentée (140) est pourvue de moyens d'engagement (142) pour le rappel de l'élément de rattrapage de jeu (110).

36. Frein sur roue selon la revendication 34, **caractérisé en ce que** la roue dentée (140) est logée à rotation sur un élargissement (122b) latéral de l'élément fileté (122).

37. Frein sur roue selon l'une quelconque des revendications précédentes, **caractérisé en ce que** le premier élément fileté (121) est logé dans au moins un élément de friction (161, 167).

38. Frein sur roue selon l'une quelconque des revendications précédentes, **caractérisé en ce que** le premier élément fileté (121) présente sur l'une de ses deux extrémités, un tourillon sphérique (160) qui est logé dans un coussinet sphérique (161).

39. Frein sur roue selon l'une quelconque des revendications précédentes, **caractérisé par** un levier d'application (13) pivotant du dispositif d'application qui s'appuie d'une part par rapport au carter de frein (1), et d'autre part en direction du vérin presseur (2), et un dispositif de transmission de pression disposé dans le flux de forces entre le levier d'application (13) et le vérin presseur (2), se composant d'un premier élément de pression (60) réalisé de manière mobile en rotation par rapport au levier d'application (13) et présentant une surface de pression (60a), ainsi qu'un second élément de pression (59) rotatif par rapport au premier élément de pression (60) et présentant une surface de contre-pression (12a).
